# EUROPÄISCHE PATENTSCHRIFT

(11) **EP 1 640 637 B1**
(45) Veröffentlichungstag und Bekanntmachung des Hinweises auf die Patenterteilung: **25.03.2009**
(21) Anmeldenummer: 05021774.4
(22) Anmeldetag: 29.09.2003
(51) Int. Cl.: F16H 15/42, F16H 37/02

(54) **Getriebe mit zwei parallel geschalteten Getriebesträngen**
Transmission with two parallel torque paths
Transmission à deux arbres d'entraînement

(30) Priorität: 30.09.2002 DE 10245897; 07.10.2002 DE 10246655; 30.01.2003 DE 10303891; 30.01.2003 DE 10303896; 31.01.2003 DE 10304094; 20.05.2003 DE 10323109
(43) Veröffentlichungstag der Anmeldung: 29.03.2006
(62) Teilanmeldung aus: 03753332.0
(73) Patentinhaber: Rohs, Ulrich, Dr., 52351 Düren (DE)
(72) Erfinder: Dräger, Christoph, 52379 Langerwehe/Jüngersdorf (DE); Brandwitte, Werner, 52379 Langerwehe (DE); Rohs, Ulrich, Dr.-Ing., 52351 Düren (DE)
(74) Vertreter: Reuther, Martin

(56) Entgegenhaltungen:
- EP-A- 0 878 641
- EP-A- 0 980 993
- FR-A- 2 800 826
- GB-A- 298 676
- US-A- 1 069 182

## Beschreibung

Die Erfindung betrifft ein Getriebe mit einem stufenlos einstellbaren Teilgetriebe mit den Merkmalen gemäß Oberbegriff von Anspruch 1. Derartige Getriebe sind an sich hinlänglich, beispielsweise aus der EP 0 878 641 A1 und aus der EP 0 980 993 A2, bekannt. Zwar werden in diesen Druckschriften lediglich Kegelreibringgetriebe beschrieben, vorliegende Erfindung ist jedoch auch in Verbindung mit anderen stufenlos einstellbaren Getrieben (CVT) umsetzbar.

Derartige stufenlos einstellbare Getriebe haben in vielen Fahrsituationen große Vorteile, insbesondere hinsichtlich Fahrkomfort bzw. der Ausnutzung der vom Antrieb angebotenen Drehmomente. Andererseits sind derartige Getriebe insbesondere in bestimmten Fahrsituationen nachteilig. Letzteres kann beispielsweise bei Langsamfahrten, im Rückwärtsgang bzw. bei konstanter Dauerbelastung der Fall sein.

Es ist Aufgabe vorliegender Erfindung, ein Getriebe mit einem stufenlos einstellbaren Getriebeteil bereitzustellen, bei welchem Probleme in besonderen Fahrsituationen vermindert sind.

Als Lösung schlägt die Erfindung ein Getriebe mit den Merkmalen des Anspruchs 1 vor. Ausgestaltungen sind in den abhängigen Ansprüchen enthälten.

Eine derartige erfindungsgemäße Anordnung ermöglicht es, besondere Fahr- bzw. Lastsituationen durch den zweiten Getriebestrang zu realisieren, während der erste Getriebestrang die Vorteile des stufenlos einstellbaren Getriebes bereitstellen kann. In vorliegendem Zusammenhang bezeichnet der Begriff "Parallelschaltung zweier Getriebestränge", dass die beiden Getriebestränge zwischen ein gemeinsames eingangsseitiges Getriebeteil, wie beispielsweise die Antriebswelle eines Motors oder eine Kupplungsscheibe oder ähnliches, und ein gemeinsames ausgangsseitiges Getriebeteil, wie beispielsweise das Hauptdifferential eines Kraftfahrzeuges, aufweisen. Zwischen dem eingangsseitigen gemeinsamen Getriebeteil und dem ausgangsseitigen Getriebeteil können die beiden Getriebestränge gleichzeitig abwechselnd, summierend und/oder differentiell betrieben werden, um so verschiedenen Anforderungen gerecht zu werden.

Insofern kann es vorteilhaft sein, wenn in dem zweiten der beiden Getriebestränge ein Rückwärtsgang, ein erster Gang und/oder ein Overdrive vorgesehen ist. Für diese Situationen sind stufenlos einstellbare Getriebe nur bedingt und unter verhältnismäßig großem Aufwand einsetzbar bzw. mit großen Verlusten, insbesondere im Overdrive, dass heißt bei großen Drehzahlen und niedrigen Drehmomenten, behaftet.

Ist zwischen den beiden Getriebesträngen wenigstens ein Freilauf vorgesehen ist, so können diese Getriebestränge ohne komplexen Schaltaufwand bzw. ohne aufwendige Schalt- und Regeltechnik zusammengeführt werden.

Kumulativ bzw. alternativ kann bei einem Getriebe, welches ein stufenlos einstellbares Teilgetriebe umfasst, letzteres zwischen zwei Leistungsteilern, wie beispielsweise einem Differentialgetriebeteil oder einem Planetengetriebeteil, angeordnet sein, wobei wenigstens ein Eingang des stufenlos einstellbaren Teilgetriebes mit wenigstens einem Ausgang eines eingangsseitigen Leistungsteilers und wenigstens ein Ausgang des stufenlos einstellbaren Teilgetriebes mit wenigstens einem Eingang eines ausgangsseitigen Leistungsteilers wirkverbunden sein. Durch eine derartige Anordnung kann eine Drehmomentübertragung vergrößerbar ausgestaltet bzw. der Stellbereich des stufenlos einstellbaren Teilgetriebes vergrößert werden, wobei nach vorliegendem Kenntnisstand dieses auf Kosten des Wirkungsgrades geschieht, da die beiden Leistungsteiler naturgemäß in der Regel zu Verlusten ftihren. Andererseits ermöglicht eine derartige Anordnung eine erhebliche Erhöhung in der Anwendungsbreite für stufenlose Getriebe. Darüber hinaus kann hierdurch das Drehmoment, welches durch das stufenlos einstellbare Teilgetriebe selbst geleitet werden muss, reduziert werden, wodurch bei geeigneter Ausgestaltung die Verluste in Grenzen gehalten werden können, da ein geringeres Drehmoment im stufenlos einstellbaren Getriebe, insbesondere wenn es sich um ein Kegelreibringgetriebe handelt, dort zu geringeren Verlusten führt, die dementsprechend die Verluste in den Leistungsteilern verringern können.

Kumulativ bzw. alternativ kann bei einem Getriebe, welches auch unabhängig vom Vorhandensein eines stufenlosen Getriebes wenigstens einen Vorwärtsgang und wenigstens einen Rückwärtsgang umfasst, ein Differentialgetriebe vorgesehen sein, welches diesen Vorwärtsgang und diesen Rückwärtsgang realisiert, wobei wenigstens eine Baugruppe des Differentialgetriebeteils wahlweise mit dem Gehäuse und/oder mit einer anderen Baugruppe des Differentialgetriebeteils festlegbar ist. Auf diese Weise kann sehr kompakt ein Getriebe mit einem Vorwärtsgang und einem Rückwärtsgang realisiert werden, in dem beispielsweise eine differentielle Baugruppe eines Differentialgetriebes als Eingang genutzt wird. Wenn dann die zentrale Baugruppe des Differentials mit der zweiten differentiellen Baugruppe verbunden ist, so kann eine Drehrichtung realisiert werden. Wird dagegen die zweite differentielle Baugruppe bzw. die zentrale Baugruppe des Differentials mit dem Gehäuse verbunden und auf diese Weise festgelegt, so ändert die andere, jeweils nicht festgelegte Baugruppe ihre Drehrichtung, wodurch die vorerwähnte Gangumkehr realisiert werden kann. Auf diese Weise lässt sich besonders kompakt ein Getriebe realisieren, welches einen Vorwärtsgang und einen Rückwärtsgang aufweist.

Darüber hinaus wird kumulativ bzw. alternativ ein Getriebe vorgeschlagen, welches wenigstens zwei Getriebestufen, die über ein Schaltgetriebeteil wahlweise in den Getriebestrang geschaltet werden können, umfasst, wobei eine erste der beiden Getriebestufen ein stufenlos einstellbares Teilgetriebe aufweist. Eine derartige Anordnung ist scheinbar zunächst systemwidrig, da ein stufenloses Getriebes vorgesehen wird, um auf Schaltungen jeglicher Art verzichten zu können. Eine derartige Anordnung ermöglicht es jedoch, ein stufenloses Getriebe nur dann zu verwenden, wenn dessen Vorteile tatsächlich überwiegen. Beispielsweise treten beim Anfahren häufig verhältnismäßig hohe Drehmomente auf, die ein stufenloses Getriebes erheblich belasten bzw. eine überdimensionale Auslegung des stufenlosen Getriebes erfordern. Insofern ist es vorteilhaft, beispielsweise einen ersten Gang getrennt zu realisieren und erst nach einem Anfahren das stufenlos einstellbare Teilgetriebe zuzuschalten. Hierbei kann insbesondere das stufenlos einstellbare Teilgetriebe derart dimensioniert sein, dass vor dem Schaltvorgang von der einen in die andere der beiden Getriebestufen eine Drehzahlanpassung der zweiten Getriebestufe durch das stufenlos einstellbare Getriebe an die Drehzahl der erste Getriebestufe erfolgt, so dass der Übergang von der ersten Getriebestufe zu der zweiten Getriebestufe bzw. auch von der zweiten Getriebestufe zu der ersten Getriebestufe an sich stufenlos erfolgen kann. Auf diese Weise können die Vorteile eines stufenlosen Teilgetriebes optimal genutzt werden, ohne Nachteile, wie sie beispielsweise beim Anfahren auftreten können, in Kauf nehmen zu müssen.

Selbiges gilt für Zustände mit im Wesentlichen konstanter Leistung bzw. mit im Wesentlichen konstanten Drehmomenten, bei denen an sich ein stufenlos einstellbares Teilgetriebe nicht zwingend notwendig ist, da Geschwindigkeitsänderungen durch Drehzahländerungen des Motors umgesetzt werden können. In derartigen Betriebszuständen weisen stufenlos einstellbare Teilgetriebe in der Regel - beispielsweise durch Schlupf bedingt - hohe Verluste auf, die durch eine zugeschaltete Getriebestufe vermieden werden können, wobei auch hier das Schalten an Betriebspunkten realisiert werden kann, bei denen ein derartiger Stufenwechsel Fahrzeuginsassen nicht bzw. nur unwesentlich auffällt. Insbesondere kann hierzu das stufenlos einstellbare Getriebe in eine geeignete Betriebssituation gebracht werden. Beispielsweise ist es auch denkbar, eine derartige Getriebestufe über einen Freilauf zu- bzw. abzuschalten.

Darüber hinaus kann die neben der das stufenlos einstellbare Teilgetriebe umfassenden Getriebestufe zuschaltbare Getriebestufe ein Differentialgetriebeglied umfassen, welches beispielsweise zur Schaltung zwischen Vorwärts- und Rückwärtsgang sowie für einen Anfahrtsgang genutzt wird. Insbesondere bei einer derartigen Ausgestaltung ist es vorteilhaft, wenn die Festlegung der Baugruppen des Differentialgetriebegliedes, die zum Schalten zwischen Vorwärts- und Rückwärtsgang notwendig ist, über Reibungskupplungen erfolgt, wodurch ein möglichst schonendes und gleichmäßiges Umschalten realisiert werden kann.

Es kann ein dritter Getriebestrang vorgesehen sein, der über ein zweites Schaltgetriebeteil und/ oder einen Freilauf zuschaltbar ist.

Bei einem Getriebe mit zwei Getriebestufen, die über ein Schaltgetriebeteil wahlweise in den Getriebestrang geschaltet werden können, wobei eine erste der beiden Getriebestufen ein stufenlos einstellbares Teilgetriebe umfasst, kann das Schaltgetriebeteil das stufenlos einstellbare Teilgetriebe mit einem Pumpenrad eines Trilokwandlers, oder einer anderen Baugruppe, die unmittelbar mit einer Motorausgangswelle verbunden ist, gekoppelt und die zweite Getriebestufe mit einem Turbinenrads des Trilokwandlers, oder einer anderen zuschaltbaren Motorausgangsbaugruppe, gekoppelt sein. Hierdurch kann die Motorleistung, insbesondere bei normalen Betriebszuständen, unmittelbar zu dem stufenlos einstellbaren Teilgetriebe geleitet werden, während, insbesondere bei Anfahrvorgängen, hohe Drehmomente zu der zweiten Getriebestufe übertragen werden, so dass diesbezüglich das stufenlos einstellbare Teilgetriebe entlastet ist. Dieses gilt insbesondere im Zusammenspiel mit dem Turbinenrad eines Trilokwandlers, bei dem naturgemäß eine Drehmomentüberhöhung auftritt, welche ansonsten das stufenlos einstellbare Teilgetriebe erheblich belasten würde.

Insbesondere im Zusammenspiel mit einem Elektromotor ist ein stufenlos einstellbares Teilgetriebe mit koaxial angeordnetem Antrieb und Abtrieb auch unabhängig von den übrigen Merkmalen des erfindungsgemäßen Getriebes vorteilhaft, da bei einer derartigen Anordnung auf besonders kompakte Weise auf das Gehäuse wirkende Drehmomente minimiert werden können. Vorzugsweise ist in dem koaxial vorgesehenen Abtrieb ein Differentialgetriebeteil vorgesehen, welches seinerseits von einem Abtrieb des stufenlosen Getriebe angetrieben wird. Diese Anordnung ist besonders kompakt, da der Abtrieb des stufenlosen Getriebes ohne weitere Zwischenstufen auf ein Differentialgetriebe wirkt, welches ohnehin, insbesondere bei Kraftfahrzeugen, vorgesehen sein muss. Darüber hinaus werden in der Regel ohnehin Zahnräder oder andere Getriebeglieder benötigt, um einen koaxialen Antrieb und Abtrieb vorzusehen, so dass durch das Differentialgetriebeteil keine zusätzlichen Baugruppen notwendig werden. Die vorstehend beschriebenen Anordnungen eignen sich insbesondere im Zusammenspiel mit einem elektromotorischen Antrieb, wobei es an sich zunächst systemwidrig erscheint, einen Elektromotor mit einem stufenlos einstellbaren Getriebe zu verbinden, da ein Elektromotor ohnehin in seiner Drehzahl nahezu beliebig einstellbar ist. Andererseits ermöglicht es das stufenlos einstellbare Getriebe, einen Elektromotor bei Drehzahlen zu betreiben, bei denen er günstige Drehmoment/Stromstärkenverhältnisse aufweist. Auf diese Weise lässt sich der Gesamtwirkungsgrad des entsprechenden Antriebsstranges erhöhen bzw. die benötigte Strommenge, insbesondere bei niedrigen Drehzahlen, reduzieren.

Ein erfindungsgemäßes Getriebe, aber auch ein anderes stufenlos einstellbares Getriebe, kann an- oder abtriebsseitig mit einer Trennstelle, wie einer Anfahrkupplung, einem Wandler, einer Reibscheibe, einer Nasskupplung bzw. einer Synchronisierung, wirkverbunden sein. Diese an sich einem stufenlos einstellbare Getriebe konträrer Anordnung hat den Vorteil, dass das stufenlose Getriebe bzw. der Antrieb bei Anfahrvorgängen geschont werden kann, so dass die Lebensdauer verlängert ist. Besonders vorteilhaft ist eine abtriebsseitig vorgesehene Anfahrkupplung bzw. Trennstelle, da bei einer derartigen Anordnung eine Stillstandsverstellung bei laufendem Motor ermöglicht ist. Andererseits ermöglicht eine antriebsseitige Anfahrkupplung bzw. Trennstelle ein Zuschalten anderer Getriebeglieder, falls dieses notwendig sein sollte.

Die beiden Teilgetriebe kämmen vorzugsweise mit ihrem Abtrieb an einem Antrieb des hierauf folgenden Getriebestranges und werden auf diese Weise wieder zusammengeführt. Das Getriebe baut besonders kompakt, wenn dieser Antrieb des folgenden Getriebestranges das Hauptdifferential, also das die beiden Räder einer angetriebenen Kraftfahrzeugachse verbindende und antreibende Differential ist. Eine derartige kompakte Bauweise schlägt sich einerseits in einer geringen Stückzahl nieder, wodurch die Kosten reduziert werden können. Andererseits bedingt eine derartig kompakte Bauweise ein geringes Bauvolumen, wodurch die Gesamtkosten für das Kraftfahrzeug weiter gesenkt werden können.

Je nach konkreter Umsetzung kann es vorteilhaft sein, wenn eines der beiden Teilgetriebe einen Rückwärtsgang, gegebenenfalls mit einem ersten Gang, umfasst, während das zweite Teilgetriebe das stufenlos einstellbare Getriebe, insbesondere ein Kegelreibringgetriebe, aufweist. Insbesondere wenn das erste dieser Teilgetriebe auf einen separaten ersten Gang verzichtet, folgt eine besonders kompakte Bauweise mit den zuvor geschilderten Vorteilen.

Vorzugsweise sind die beiden Teilgetriebe jeweils zu- bzw. abschaltbar. Dieses kann insbesondere dadurch geschehen, dass die jeweiligen Teilgetriebestränge über eine Kupplung zu unterbrechen sind. Hierbei spielt es in erster Näherung keine Rolle, an welcher Stelle diese Unterbrechung vorgenommen wird; dieses kann sowohl antriebsseitig als auch abtriebsseitig erfolgen, wobei die jenseits dieser Trennung angeordneten Getriebeglieder ohne weiteres unbelastet mitlaufen können, so dass die beiden Teilgetriebestränge nicht jeweils mit zwei Kupplungen versehen sein müssen. Zur Vermeidung von Verlusten aufgrund leer mitlaufender Getriebeglieder können jedoch auch mehrere Kupplungen in den Teilgetriebesträngen vorgesehen sein. Letzteres erhöht jedoch die Zahl der Bauteile und den benötigten Bauraum, was sich wiederum hinsichtlich der Kosten auswirkt.

Es versteht sich, dass ein derartiger Aufbau eines stufenlosen Gebtriebes mit einem parallelen Teilgetriebe auch unabhängig von den übrigen Merkmalen vorliegender Erfindung vorteilhaft ist. Dieses gilt insbesondere im Zusammenspiel mit einem Kegelreibringgetriebe als stufenloses Getriebe, da hierdurch die Vorteile einer durch das Kegelreibringgetriebe bedingte Drehrichtungsumkehr sehr effektiv mit dem anderen Teilgetriebe auf kompakte Weise umgesetzt werden können.

Im Lichte einer kompakten Bauweise wird darüber hinaus vorgeschlagen, bei einem stufenlos einstellbaren Getriebe, insbesondere bei einem Kegelreibringgetriebe, ein Kupplungselement, welches einem Zu- bzw. Abschalten des das stufenlos einstellbare Getriebe umfassenden Getriebestranges dient, innerhalb eines der stufenlos einstellbaren Getriebeglieder, beispielsweise innerhalb eines Kegels, des jeweiligen stufenlos einstellbaren Getriebes vorzusehen. Bei einem stufenlos einstellbaren Getriebe müssen verhältnismäßig große Wechselwirkungsflächen an den wesentlichen Getriebegliedern bereit gestellt werden, damit eine entsprechende Variabilität gewährleistet werden kann. Durch die Anordnung eines derartigen Kupplungselementes innerhalb der diese großen Wechselwirkungsflächen umfassenden Getriebeglieder kann erheblich Bauraum gespart werden, da der ansonsten ungenutzte Bauraum innerhalb dieser Getriebeglieder genutzt wird. Es versteht sich, dass eine derartige Anordnung eines Kupplungselementes auch unabhängig von den übrigen Merkmalen vorliegender Erfindung bei einem stufenlos einstellbaren Getriebe die entsprechenden Vorteile zeigt.

Darüber hinaus ist es häufig bei Getrieben mit zwei auf unterschiedlichen Achsen umlaufenden Getriebegliedern notwendig, diese über eine Anpresseinrichtung gegeneinander zu verspannen, um ausreichende Wechselwirkungskräfte zwischen den beiden Getriebegliedern bereit zu stellen. Dies gilt insbesondere auch für stufenlos einstellbare Getriebe, insbesondere wenn diese reibend miteinander wechselwirken, wobei die Anpresskraft gegebenenfalls vom zu übertragenden Drehmoment abhängig gewählt wird.

Bei einer derartigen Anordnung kann es, unabhängig von den übrigen Merkmalen vorliegender Erfindung, vorteilhaft sein, ein Kupplungselement, welches diese beiden Getriebeglieder wahlweise durch Öffnen von einem dritten Getriebeglied trennt bzw. durch Schließen mit diesem dritten Getriebeglied verbindet, vorzusehen, so dass der jeweilige Getriebestrang wahlweise einem Gesamtgetriebe zugeschaltet werden kann. Vorzugsweise werden bei einer derartigen Anordnung die zum Schließen des Kupplungselements notwendigen Kräfte von der Anpresseinrichtung aufgebracht. Insofern ist es vorteilhaft, wenn das Kupplungselement in dem Kraftweg der Anpresskraft angeordnet ist.

Bei einer derartigen Anordnung reicht es aus, zum Öffnen der Kupplung die Anpresskraft an einer geeigneten Stelle zu kompensieren, so dass die Anpresskraft die entsprechende Kupplung nicht mehr belastet. Auf diese Weise öffnet die entsprechende Kupplung, und die beiden Getriebeglieder sind entsprechend ausgekoppelt. Insbesondere wenn die Anpresseinrichtung Drehmoment abhängig angesteuert ist, folgt hieraus unmittelbar, dass die Anpresskraft reduziert wird, da, bedingt durch die offene Kupplung, ein Drehmoment nicht mehr übertragen wird. Auf diese Weise reduzieren sich die zum Öffnen aufzubringenden Kräfte unmittelbar in einem erheblichen Maße. Darüber hinaus bedingt die Reduktion der Anpresskraft im Übrigen auch eine Reduktion der Verluste, die durch die eventuell noch frei mitlaufenden Getriebeglieder bedingt sein könnten. Zum Schließen der Kupplung braucht die entsprechende Gegenkraft lediglich reduziert werden, so dass die Anpresseinrichtung wieder wirksam wird. Es werden somit zum Schließen der Kupplung keine zusätzlichen Baugruppen benötigt.

Des weiteren wird kumulativ bzw. alternativ ein stufenlos einstellbares Getriebe, insbesondere ein Kegelreibringgetriebe, mit einem hinter dem Abrieb vorgesehenem Rückwärtsgang in Reihe mit dem übrigen Getriebe vorgeschlagen. Eine derartige Anordnung hat einerseits den Vorteil, dass das Getriebe mit einem konstanten Drehsinn betrieben werden kann, was für das stufenlos einstellbare Getriebe hinsichtlich seiner Ansteuerung bzw. hinsichtlich der Verstellung des Reibrings vorteilhaft ist. Darüber hinaus ermöglicht diese Anordnung, auch den Rückwärtsgang stufenlos zu variieren.

Im Sinne der Anordnung des Rückwärtsganges beziehen sich die Begriffe "in Reihe", "vorne" bzw. "hinten" auf den Kraftfluss in dem ein stufenloses Getriebe umfassenden Antriebsstrang. Insofern soll erfmdungsgemäß der Rückwärtsgang in Reihe an der dem Motor in dem Antriebsstrang abgewandten Seite des stufenlos einstellbaren Getriebes vorgesehen sein.

Vorzugsweise umfasst der Rückwärtsgang ein Umlaufgetriebe mit wenigstens einem umlaufenden Getriebegestell, welches wenigstens ein Getriebeglied des Umlaufgetriebes lagert und wahlweise mit einem Gehäuse bzw. mit einem umlaufenden Getriebeglied festlegbar ist. Durch eine derartige Anordnung wird ein Rückwärtsgang bereitgestellt, der - je nach Erfordernissen - auch während der Rotation des Antriebes, also auch während der Rotation des Kegelreibringgetriebes bzw. des stufenlos einstellbaren Getriebes, geschaltet werden kann, indem das umlaufende Getriebeglied entsprechend wahlweise festgelegt wird, wobei ein derartiges Festlegen durch geeignete Kupplungen bzw. Synchronisationen entsprechend schonend durchgeführt werden kann. Eine derartige Umschaltmöglichkeit ist insbesondere an die Erfordernisse eines Kegelreibringgetriebes angepasst, welches seinerseits lediglich in rotierendem Zustand in seinem Übersetzungsverhältnis variiert werden kann.

Der Rückwärtsgang kann insbesondere ein Planetengetriebe mit Planeten, Sonnenrad und Außenrad umfassen, von denen ein erstes Getriebeglied mit dem Abtrieb des stufenlos einstellbaren Getriebes und ein zweites Getriebeglied mit dem Abtrieb der Gesamtanordnung aus stufenlos einstellbaren Getriebe und Rückwärtsgang wirkverbunden ist, während das dritte Getriebeglied bezüglich eines Gehäuses wenigstens hinsichtlich eines Freiheitsgrades festlegbar ist. Ein Planetengetriebe hat die vorteilhafte Eigenschaft, dass bei Festlegung eines der Getriebeglieder - Außenrad, Sonnenrad, Planeten, wobei letztere ihre Eigenrotationsfähigkeit vorteilhafterweise beibehalten sollten - jeweils die anderen Getriebeglieder weiter umlaufen können und entsprechend der hieraus resultierenden Übersetzungsverhältnisse miteinander wechselwirken. Insbesondere bedingt ein entsprechendes Festlegung eines Getriebegliedes wenigstens hinsichtlich eines Freiheitsgrades eine substantielle Änderung der Relativgeschwindigkeiten zwischen den restlichen beiden Getriebegliedern, sodass diese Änderung der Relativgeschwindigkeit zur Ansteuerung des Rückwärtsganges genutzt werden kann.

Letzteres lässt sich insbesondere dadurch gewährleisten, dass das dritte Getriebeglied die Planeten sind. Sind bei einem Planetengetriebe die Planeten an sich in ihrem rotatorischen Freiheitsgrad um das entsprechende Sonnenrad festgelegt, so folgt unmittelbar eine Drehrichtungsumkehr zwischen dem Außenrad und dem Sonnenrad, wodurch ein entsprechender Rückwärtsgang umgesetzt werden kann, wenn bei entsprechend mitlaufendem Planeten der jeweilige Vorwärtsgang realisiert wird, wobei - gegebenenfalls - durch das Planetengetriebe Übersetzungsverhältnisse in geeigneter Weise gewählt werden können.

Die Gesamtanordnung aus stufenlos einstellbaren Getriebe bzw. insbesondere aus Kegelreibringgetriebe und Rückwärtsgang baut besonders kompakt, wenn das erste Getriebeglied von einem mit dem Abtriebskegel des Kegelreibringgetriebes umlaufenden Ritzel angetrieben wird. Eine derartige Anordnung gewährleistet einen unmittelbaren und direkten Kraft- bzw. Drehmomentfluss zwischen Kegelreibringgetriebe und Rückwärtsgang, sodass die Gesamtanordnung äußerst kompakt und damit insbesondere für moderne Kraftfahrzeuge äußerst wirtschaftlich baut.

Hinsichtlich letzterer Anforderung kann es kumulativ bzw. alternativ vorteilhaft sein, wenn das zweite Getriebeglied mit dem umlaufenden Gestell eines Differentials verbunden umläuft. Insbesondere im Zusammenhang mit dem Einsatz in einem Kraftfahrzeug kann hierbei das Hauptdifferential vorteilhaft genutzt werden, sodass der Rückwärtsgang unmittelbar und direkt in das Differential integriert wird, wobei insbesondere im Zusammenhang mit einem Kegelreibringgetriebe unabhängig von der antriebsseitigen Ausgestaltung des Rückwärtsganges eine kompakte Bauweise resultiert.

Insbesondere hinsichtlich des Normalbetriebes ist es vorteilhaft, wenn das erste und das zweite Getriebeglied miteinander festlegbar sind. Je nach konkreter Ausgestaltung der Schaltprozesse hinsichtlich des Rückwärtsganges kann eine derartige Verstellung auch anderweitig vorteilhaft genutzt werden, um einen gewünschten Betriebszustand des Planetengetriebes zu fixieren. Dadurch, dass das erste und das zweite Getriebeglied miteinander festlegbar sind, wird ein unmittelbarer Kraftfluss über das Planetengetriebe sichergestellt, sodass in diesem Betriebszustand das Planetengetriebe im Wesentlichen verlustfrei arbeitet und insbesondere hinsichtlich eines Vorwärtsganges die Gesamtanordnung mit einem äußerst hohem Wirkungsgrad arbeitet. Vorzugsweise ist die wahlweise Festlegung des dritten Getriebes sowie der beiden ersten Getriebeglieder entsprechend gekoppelt, sodass das Planetengetriebe in seinen Zuständen jeweils betriebssicher umläuft. Diesbezüglich ist es insbesondere vorteilhaft, wenn das erste bzw. zweite Getriebeglied durch das Außenrad bzw. Sonnenrad des Planetengetriebes und das dritte Getriebeglied durch die Planeten gebildet wird, da hierdurch das notwendige Zusammenspiel zwischen den Getriebegliedern auf sehr einfache und kompakte Weise realisiert werden kann. Dieses gilt insbesondere dann, wenn das zweite Getriebeglied unmittelbar mit dem umlaufenden Gestell eines Differentials verbunden bzw. einstückig mit diesem ausgebildet ist und/oder das erste Getriebeglied unmittelbar von einem mit dem Abtriebskegel verlaufenden Ritzel angetrieben wird. Bei einer derartigen Ausgestaltung kann die Gesamtanordnung insbesondere bei herkömmlichen Kraftfahrzeugantrieben, welche bedingt durch die hohen Stückzahlen und Variationen in den komplementären Kraftfahrzeugklassen jeweils mit gleichsinnigen Antrieben ausgestaltet sind, zu einem außergewöhnlich kompakten und damit preisgünstigen und auch bei Kleinstfahrzeugen einsetzbaren Getrieben führen.

Zum Festlegen, beispielsweise des umlaufenden Getriebegestells bzw. der Planeten oder des dritten Getriebegliedes bezüglich des Gehäuses hinsichtlich eines Freiheitsgrades, können die verschiedensten Arten, wie Reib- oder Formschlussverbindungen für eine derartige Festlegung vorteilhaft zur Anwendung kommen. Insbesondere als vorteilhaft haben sich erwiesen Reibschlussverbindungen, die einen fließenden Übergang ermöglichen, der - je nach konkreter Ausgestaltung - sogar ein Einschalten des Rückwärtsganges während der Rotation ermöglicht. Letzteres ist jedoch wegen der verhältnismäßig hohen Kräfte und Reibungsverlusten nicht bei jeder Anwendungsform vorteilhaft, sodass insbesondere eine Anfahrkupplung zwischen Motor und dem Kegelreibringgetriebe in derartigen Fällen vorteilhaft sein kann. Zum Festlegen eignen sich ― je nach konkretem Anwendungsfall ― Kupplungen, auflaufende Bremsen, Synchronisierungen und ähnliche Anordnungen, wie sie an sich im Zusammenhang mit altbekannten Getrieben Gang und Gebe sind.

Es versteht sich, dass eine derartige Anordnung eines Rückwärtsganges auch kumulativ bzw. alternativ zu den Merkmalen vorliegender Erfindung vorteilhaft ist.

Es ist daher Aufgabe vorliegender Erfindung, ein stufenlos einstellbares Getriebe bereitzustellen, welches auch höhere Drehmomente betriebssicher und unter geringen Verlusten übertragen kann.

Um ein stufenlos einstellbares Getriebe bereitzustellen, welches auch höhere Drehmomente betriebssicher und unter geringen Verlusten übertragen kann, wird vorgeschlagen, ein derartiges Getriebe kumulativ bzw. alternativ zu den vorgenannten Merkmalen mit wenigstens zwei stufenlos einstellbaren Teilgetrieben, die parallel in einem Getriebestrang angeordnet sind, zu versehen, wobei die beiden stufenlos einstellbaren Teilgetriebe über ein Summengetriebe auf ein Eingangs- bzw. Ausgangsglied geschaltet sind.

Die Verwendung eines Summengetriebes, auch Überlagerungsgetriebe genannt, hat den Vorteil, dass identische Drehzahlen bzw. exakt festgelegte Drehzahlen für eines der Getriebeglieder der Teilgetriebe, wie sie beim Stand der Technik notwendig sind, nicht erzwungen werden. Vielmehr leisten beide Teilgetriebe ihren eigenen, drehzahlabhängigen Beitrag zur resultierenden Drehzahl des Summengetriebes. Die erfindungsgemäße Anordnung ermöglicht es somit, beide Teilgetriebe getrennt anzusteuern und auch zu regeln, und somit die Vorteile zu nutzen, die sich aus einer Zerlegung eines stufenlos einstellbaren Getriebes in zwei stufenlos einstellbare Teilgetriebe ergeben, wie beispielsweise eine Aufspaltung des Drehmoments auf die beiden Teilgetriebe, ohne dass hierdurch die Nachteile, die aus einer erzwungenen Drehzahl resultieren, wie beispielsweise Reibungsverluste oder ein erhöhter Regelungsaufwand, in Kauf genommen werden müssen.

Die an sich asymmetrische und damit freie Verschaltung der beiden Teilgetriebe über das Summengetriebe bedingt somit in ungeahnter Weise Vorteile hinsichtlich der Getriebekonzeption bzw. -nutzung, insbesondere hinsichtlich des Wirkungsgrades sowie hinsichtlich der Anforderungen an die Steuerung, die bei einer Symmetrie, wie sie durch die Kopplung der Planeten eines Planetengetriebes erzwungen wird, nicht möglich ist.

Typische Vertreter eines erfmdungsgemäßen Summengetriebes sind beispielsweise Planetengetriebe, bei welchen zwei der drei Getriebe Bestandteile (Planeten, Sonnenrad, Außenrad) mit den beiden Teilgetrieben verbunden sind und das dritte Getriebeglied als Ab- bzw. Antrieb genutzt wird, wobei die Planeten als ein Getriebeglied gemeinsam genutzt werden, bzw. ein Differential, bei welchem die beiden Teilgetriebe jeweils mit einem der differenzierenden Glieder des Differentials verbunden sind.

Die beiden stufenlos einstellbaren Teilgetriebe können an ihrer dem Summengetriebe abgewandten Seite ein gemeinsames Getriebeglied aufweisen. Dieses kann beispielsweise eine gemeinsame Eingangswelle oder eine gemeinsame Ausgangswelle sein. Ebenso kann dieses insbesondere ein direktes Getriebeglied der beiden stufenlos einstellbaren Getriebe sein, welches gemeinsam von beiden Teilgetrieben genutzt wird. Hierzu bietet sich beispielsweise bei Kegelreibringgetrieben einer der Kegel als gemeinsames Getriebeglied an. Durch eine derartige Ausgestaltung baut ein derartiges Getriebe verhältnismäßig kompakt und kostengünstig, da durch die Doppelnutzung die Gesamtzahl der Elemente des entsprechenden Getriebes minimiert werden kann.

Im vorliegenden Zusammenhang bezeichnet der Begriff "dem Summengetriebe abgewandte Seite" eine Richtung im Getriebestrang, die durch den Kraftfluss durch das Getriebe definiert ist und nicht zwingend mit den geometrischen bzw. räumlichen Verhältnissen übereinstimmen muss.

Eine Vielzahl stufenlos einstellbarer Getriebe weisen eine Hauptgetriebeebene auf, in welcher die wesentlichen Baugruppen, wie beispielsweise Ein- und Ausgangswellen, Ein- und Ausgangskegel oder ähnliche rotationssymmetrische Körper, angeordnet sind und auf diese Weise eine Getriebeebene definieren. Ein erfindungsgemäßes Getriebe baut besonders kompakt, wenn die beiden Hauptgetriebeebenen der beiden Teilgetriebe parallel zueinander angeordnet sind. Eine besonders flache Bauweise lässt sich erreichen, wenn die beiden Teilgetriebeebenen identisch sind. Ein derartig ausgestaltetes, erfindungsgemäßes Getriebe baut äußerst flach und ist darüber hinaus in der Lage, auch verhältnismäßig großen Drehmomenten zu begegnen. Unter anderem eignet sich ein derartiges Getriebe insofern insbesondere für Kleinlastkraftwagen mit Dieselmotoren, da es besonders gut hinsichtlich seines Bauraums auf eine Befestigung beispielsweise unter einer Ladefläche ausgelegt ist und darüber hinaus den hohen Drehmomenten moderner Dieselmotoren ohne Weiteres begegnen kann.

Darüber hinaus kann zwischen wenigstens einem der stufenlos einstellbaren Teilgetriebe und dem Summengetriebe ein weiteres einstellbares Teilgetriebe, wie insbesondere ein Schaltgetriebe bzw. ein Rückwärtsgang vorgesehen sein. Durch eine derartige Anordnung lassen sich Getriebe mit einem sehr weiten Antriebsverhalten, insbesondere mit der Möglichkeit eines stufenlosen Vorwärts- und Rückwärtsantriebes realisieren. Insbesondere ist es möglich, ein derartige Getriebe auch bei laufendem Antrieb derart in sich rückzukoppeln, dass der Abtrieb drehmomentfrei stillsteht.

Auch wenn vorliegende Erfindung den Wirkungsgrad des Gesamtgetriebes erheblich gegenüber Getrieben nach dem Stand der Technik erhöht, zeigen stufenlos einstellbare Getriebe, insbesondere unter verhältnismäßig konstanten Betriebsbedingungen, wie sie beispielsweise nach einem Anfahrvorgang oder auf der Landstraße bzw. auf der Autobahn entstehen, verhältnismäßig hohe Verluste. Um derartige Verluste zu vermeiden, insbesondere unter Betriebsbedingungen, bei welchen ein stufenlos einstellbares Getriebe nicht zwingend erforderlich ist, ist es von Vorteil, wenn wenigstens eines der stufenlos einstellbaren Teilgetriebe überbrückbar ist. Auf diese Weise kann beispielsweise unter den vorgenannten Betriebsbedingungen das stufenlos einstellbare Teilgetriebe mit seinen verhältnismäßig hohen Verlusten überbrückt werden, so dass unter diesen Betriebsbedingungen der Wirkungsgrad erhöht wird. Es versteht sich, dass die derartige Verwendung zweier stufenlos einstellbaren Teilgetriebe auch unabhängig von den übrigen Merkmalen vorliegender Erfindung vorteilhaft ist.

Weitere Vorteile, Ziele und Eigenschaften vorliegender Erfindung werden anhand nachfolgender Beschreibung anliegender Zeichnung erläutert, in welcher beispielhaft Getriebe dargestellt sind. In der Zeichnung zeigen:
- Fig. 1: ein erstes Getriebe im Schnitt entlang der Linie I-A-B-C-D-I in Figur 2;
- Fig. 2: das Getriebe nach Figur 1 in schematischer Seitenansicht;
- Fig. 3: eine schematische Darstellung des Getriebes nach Figur 1;
- Fig. 4: eine schematische Darstellung eines weiteren Getriebes;
- Fig. 5: eine schematische Darstellung eines weiteren Getriebes,
- Fig. 6: eine schematische Darstellung eines Antriebsstranges mit koaxialem An- und Abtrieb;
- Fig. 7: eine schematische Darstellung eines alternativen Antriebsstranges mit koaxialem An- und Abtrieb, wobei ein Reibring in zwei Betriebsposition dargestellt ist;
- Fig. 8: einen möglichen Rückwärtsgang;
- Fig. 9: eine schematische Darstellung eines weiteren Getriebes in ähnlicher Darstellungsart wie Figur 3;
- Fig. 10: das Getriebe nach Figur 9 in einem Schnitt durch das Differential, den Rückwärtsgang und die Lagerung des Ausgangskegels;
- Fig. 11: das Getriebe nach Figuren 9 und 10 in einem Schnitt durch das Differential, den Rückwärtsgang und den Abtrieb des Ausgangskegels;
- Fig. 12: das Getriebe nach Figuren 9 bis 11 in einer ähnlichen Darstellung wie Figur 1;
- Fig. 13: eine Ausschnittsvergrößerung der Darstellung nach Figur 12 bei expandierter Anpresseinrichtung;
- Fig. 14: die Anordnung nach Figur 13 bei verkürzter Anpresseinrichtung;
- Fig. 15: die Anordnung nach Figuren 13 und 14 bei geöffneter Kegelkupplung;
- Fig. 16: die Ausschnittsvergrößerung XVI in Figur 15;
- Fig. 17: eine schematische Darstellung eines nicht die Erfindung umsetzenden Rückwärtsganges; und
- Fig. 18: eine schematische Darstellung eines weiteren nicht die Erfindung umsetzenden Rückwärtsganges.
- Fig. 19: eine schematische Darstellung für eine mögliche Zerlegung des stufenlos einstellbaren Getriebes in zwei Teilgetriebe;
- Fig. 20: das Getriebe nach Figur 19 mit zusätzlichen Schaltmöglichkeiten;
- Fig. 21: eine schematische Darstellung für eine weitere mögliche Zerlegung des stufenlos einstellbaren Getriebes in zwei Teilgetriebe in ähnlicher Darstellung wie Figuren 19 und 20;
- Fig. 22: eine schematische Darstellung für eine weitere mögliche Zerlegung des stufenlos einstellbaren Getriebes in zwei Teilgetriebe in ähnlicher Darstellung wie Figuren 19 bis 21; und
- Fig. 23: ein Schaltgetriebe nach Figur 22 mit zusätzlichen Schaltmöglichkeiten.

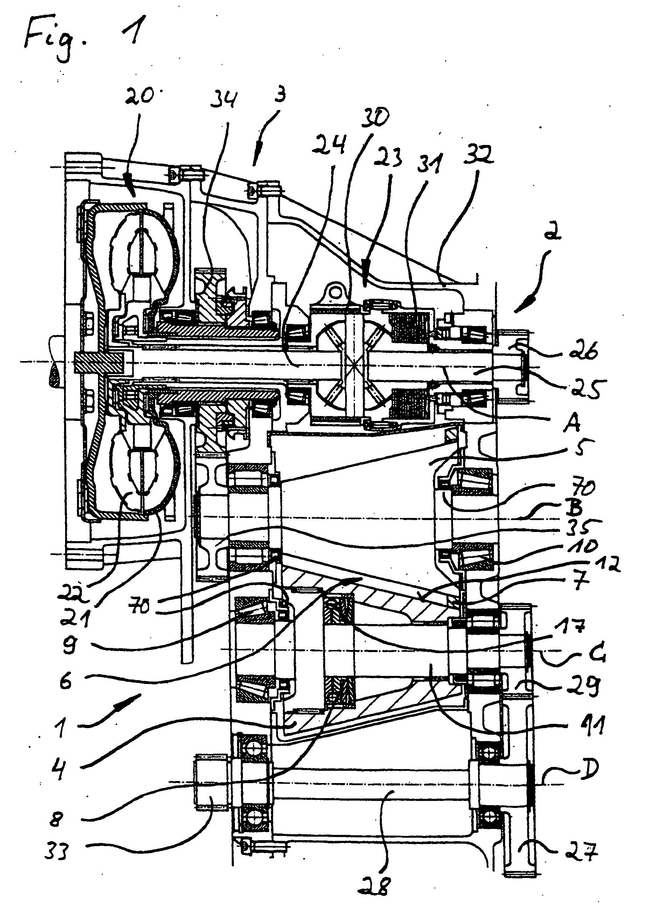

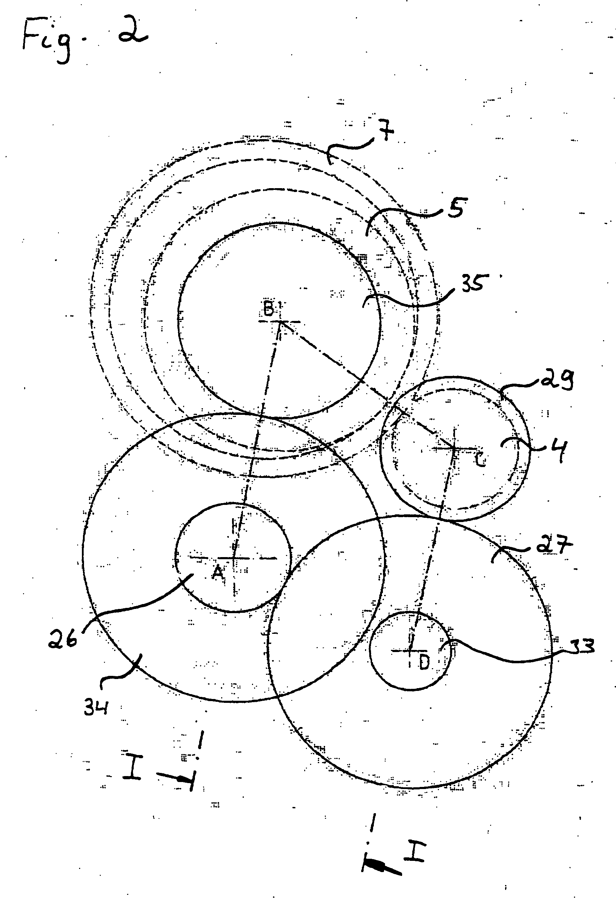

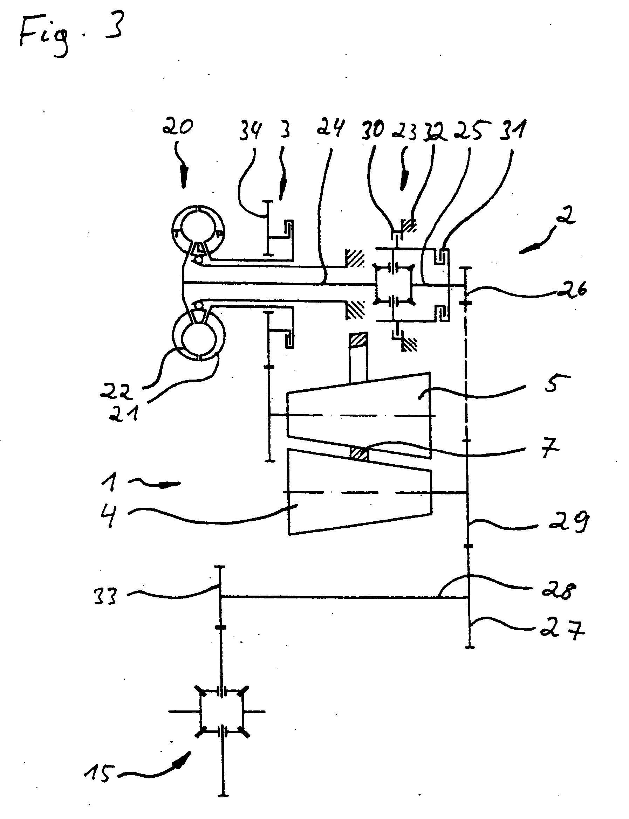

Das in Figuren 1 bis 3 dargestellte Getriebe umfasst im wesentlichen zwei Getriebestränge 1, 2, die wahlweise über ein synchronisiertes Schaltgetriebe 3 in einen Antriebsstrang geschaltet werden können.

Hierbei weist der erste Getriebestrang 1 ein Kegelreibringgetriebe mit zwei gegenläufig angeordneten Kegeln 4, 5 auf, die derart angeordnet sind, dass ein Spalt 6 zwischen den Kegeln 4, 5 verbleibt, in welchem ein Reibring 7 den Kegel 5 umgreifend läuft. Damit dieses Kegelreibgetriebe Drehmomente übertragen kann, umfasst der Kegel 4 eine Anpresseinrichtung 8, welche die beiden Kegel 4 und 5 zwischen Verspannlagern 9, 10 unter Aufbringen einer variablen Anpresskraft verspannt.

Der Kegel 4 weist einerseits eine Lauffläche 12 sowie andererseits ein Verspannelement 11 auf, zwischen denen die Anpresseinrichtung 8 wirksam ist, wobei die Anpresseinrichtung 8 das Verspannelement 11 bezüglich der Lauffläche 12 axial verlagern kann, sodass sich das Verspannelement 11 einerseits an dem Verspannlager 9 abstützt und andererseits die Lauffläche 12 gegen den Reibring 7 drückt, wobei diesem Druck durch den zweiten Kegel 4 und das komplementäre Verspannlager 10 begegnet wird.

Im einzelnen umfasst die Anpresseinrichtung 8 zwei Tellerfedern sowie zwei Anpresselemente und zwei zwischen den Anpresselementen angeordnete Wälzelemente 17. Die Tellerfedern sowie die Anpresselemente sind hinsichtlich der Anpresskraft in Reihe angeordnet, sodass dem einen Anpresselement ein gegenüber dem Stand der Technik wesentlich größerer Bewegungsspielraum bei einer Drehmomentsänderung verbleibt, was zu einer genaueren und reproduzierbaren Einstellung der Anpresskraft führt. Darüber hinaus weist die Tellerfeder radiale Aussparungen auf, welche in entsprechende Vorsprünge der die Lauffläche 12 aufweisenden Baugruppe bzw. des Anpresselements eingreifen. Auf diese Weise überträgt die Tellerfeder Drehmoment zwischen der die Lauffläche 12 aufweisenden Baugruppe und dem Anpresselement, wodurch dieses Anpresselement von einer drehmomentbelasteten Gleitbewegung bezüglich der die Lauffläche 12 umfassenden Baugruppe entlastet wird, was wiederum zu einer höheren Reproduzierbarkeit der resultierenden drehmomentabhängigen Anpresskraft führt. Die Wälzkörper 17 laufen bei diesem Ausfilhrungsbeispiel in Bahnen der jeweiligen Anpresselemente, die eine veränderliche Tiefe aufweisen. Hierdurch kann ein drehmomentabhängiger Abstand zwischen den Anpresselementen realisiert werden, wobei die Wälzkörper 17 für eine hohe Reproduzierbarkeit der resultierenden Anpresskraft sorgen, wenn die Anpresselemente in Umfangsrichtung durch ein Auftreten des Drehmoments verlagert werden. Es versteht sich, dass die vorgenannten Merkmale unabhängig voneinander vorteilhaft für eine Reproduzierbarkeit der resultierenden Anpresskraft sorgen können.

Darüber hinaus ist offensichtlich, dass statt der Kugeln 17 auch andere Wälzkörper, wie beispielsweise Walzen bzw. an einem Anpresselement fest stationär gelagerte Wälzkörper, Anwendung finden können.

Des weiteren ist es denkbar, eine derartige Anpresseinrichtung auch in dem antreibenden Kegel 5 vorzusehen.

Statt der mechanischen Anordnung kann jedoch in einer alternativen Ausführungsform auch ein motorisches Stellglied für die Anpresseinrichtung vorgesehen sein, welches, ebenso wie hydrodynamische oder hydrostatische Axiallager, anhand gemessener Drehmoment angesteuert wird, um eine drehmomentabhängige Anpresskraft zu realisieren.

Andererseits ist offensichtlich, dass lediglich eine Verlagerung der Anpresselemente bzw. eine in Umfangsrichtung auftretende Verlagerung des die Lauffläche 12 umfassenden Bauteils und des Verspannelements 11 oder beispielsweise eine Axialkraft auf die Verspannlager 9, 10 zur Bestimmung des auftretenden Drehmoments genutzt werden kann.

Das in Figuren 1 bis 3 dargestellte Ausführungsbeispiel umfasst darüber hinaus bezüglich des stufenlos einstellbaren Kegelreibringgetriebes 2 antriebsseitig eine Anfahrkupplung, die als Trilokwandler realisiert ist. Hierbei ist die das Kegelreibringgetriebe 1 umfassende Getriebestufe über das Schaltgetriebe 3 unmittelbar mit dem Pumpenrad 21 des Trilokwandlers 20 verbindbar, während ein Anfahren über das Turbinenrad 22 des Trilokwandlers und über ein Differentialgetriebeteil 23 erfolgen kann. Letzteres Differentialgetriebeteil 23 ist mit der einen differentiellen Seite 24 mit dem Turbinenrad 22 starr verbunden, während die zweite differentielle Seite 25 aus Abtrieb dieser Getriebestufe genutzt wird und über ein Zahnrad 26 mit dem Zahnrad 27 einer Hauptabtriebswelle 28 des Gesamtgetriebes, welche ihrerseits über ein Ritzel 33 mit einem Hauptdifferential 15 eines Kraftfahrzeuges kämmt, verbunden ist, wobei das Zahnrad 27 andererseits mit dem Abtrieb 29 des Kegelreibringgetriebeteils 1 kämmt. Das Differentialgetriebeteil 23 umfasst zwei Reibungskupplungen 30, 31, die wahlweise den Haupteingang des Differentialgetriebeteils 23 an dem Gehäuse 32 oder am Ausgang 25 festlegen können. Hierdurch kann, wie unmittelbar ersichtlich, die Drehrichtung des Abtriebs geändert werden, wodurch ohne weiteres ein Vorwärts- und ein Rückwärtsgang realisiert werden können. Bei geöffneten Kupplungen 30, 31, läuft das Differential sowie das Turbinenrad 22 frei mit, so dass das Kegelreibringgetriebe trotz der Kopplung der Abtriebe genutzt werden kann.

Diese Anordnung hat den Vorteil, dass zum Anfahren bzw. im Rückwärtsgang die Vorteile des Trilokwandlers 20 genutzt werden können. Darüber hinaus sind durch das Differential 23 Vor- und Rückwärtsgang auf äußerst kompakte Weise realisiert. Andererseits kann durch das Schaltgetriebe 3 der Nachteil des Trilokwandlers 20, durch Schlupf im Normalbetrieb große Leistungsverluste sowie eine Drehmomentüberhöhung zu bedingen, vermieden werden, da durch das Schaltgetriebe 3 das Turbinenrad 22 kurzgeschlossen und der Antrieb des Kegelreibringgetriebeteils 1 unmittelbar über das Pumpenrad 21 erfolgt. Die abtriebsseitige Kopplung der beiden Getriebestränge 1 und 2 ermöglicht es darüber hinaus, vor einem Schaltvorgang zwischen diesen beiden Getriebesträngen 1 und 2 das Kegelreibringgetriebeteil 1 derart hinsichtlich seiner Übersetzung derart einzustellen, dass die beiden Getriebestufen 1 und 2 auch eingangsseitig nahezu synchronisiert sind. Die restlich Synchronisation kann durch das Schaltgetriebe 3 selbst vorgenommen werden, wobei auch der Trilokwandler 20 unterstützend wirken kann.

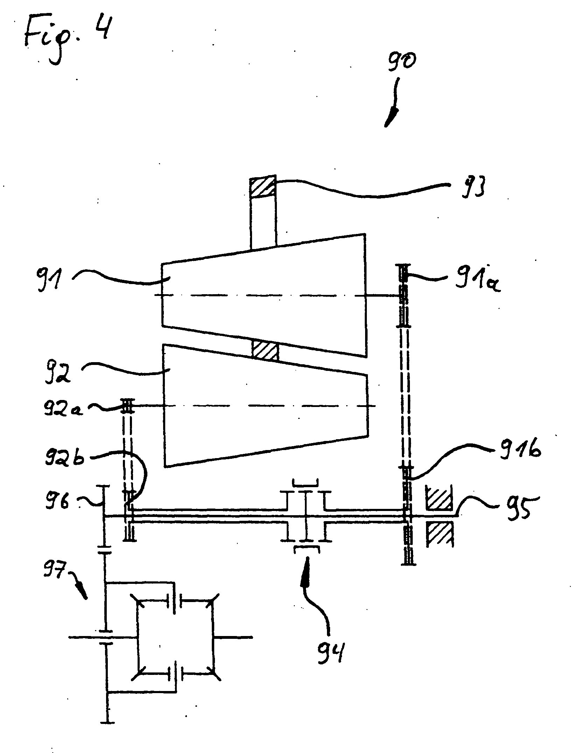

Auch bei der in Figur 4 dargestellten Getriebeanordnung sind zwei umlaufende, entgegengesetzt koaxial angeordnete Kegel 91, 92 über einen Reibring 93 miteinander wirkverbunden, der entlang einem zwischen den Mantelflächen der Kegel 91, 92 verbleibenden Spalt verlagert werden kann, so dass verschiedene Übersetzungsverhältnisse realisiert werden können. Bei dieser Anordnung sind sowohl der Antriebskegel 91 als auch der Abtriebskegel 92 über eine Synchronisation 94 auf eine Hauptabtriebswelle 95 schaltbar, die ihrerseits über ein Ritzel 96 mit dem Hauptdifferential 97 eines Kraftfahrzeuges kämmt. Bei dieser Anordnung sind der Antriebskegel 91 und der Abtriebskegel 92 bei identischer Anzahl an Drehrichtungsumkehrungen mit der Hauptabtriebswelle 95 verbunden, so dass durch die Synchronisation 94 unmittelbar eine Drehrichtungsumkehr gewährleistet werden kann. Diese Anordnung ermöglicht es bei minimalster Zahl an Baugruppen und somit auf äußerst kostengünstige Weise, einen Vorwärts- und Rückwärtsgang zu realisieren. Eine Drehrichtungsumkehr kann hierbei durch kämmende Zahnräder oder umlaufende Riemen wahlweise nur zwischen einem der Kegel 91, 92 und der Synchronisation 94 bewirkt werden, so dass durch diese Anordnung auch gegebenenfalls ein erster Gang oder ein Overdrive kostengünstig dargestellt werden können. Je nach Drehrichtung des Antriebes können die Ritzel 91a bzw. 92a und die Räder 91b und 92b über eine Riemenanordnung verbunden sein oder unmittelbar kämmen. Darüber hinaus ist es denkbar, zwischen dem Ritzel 96 und dem Hauptdifferential 97 ein drehrichtungsumkehrendes Zahnrad vorzusehen.

Vorzugsweise ist die Synchronisation mit einer Ruhestellung bzw. einer mittleren Lage versehen, so dass die Kegel 91, 92 frei laufen können. Hierdurch kann der Reibring 93 bzw. auch ein anderes Koppelglied auch bei Stillstand des Kraftfahrzeuges verstellt werden.

Die in Figur 4 dargestellte Anordnung nutzt insbesondere die Drehrichtungsumkehr des Kegelreibringgetriebes um auf kostengünstige Weise einen Vorwärts- und Rückwärtsgang bereitzustellen. Sie eignet sich insofern auch für alle anderen, die Drehrichtung umkehrenden, stufenlos einstellbaren Getriebe.

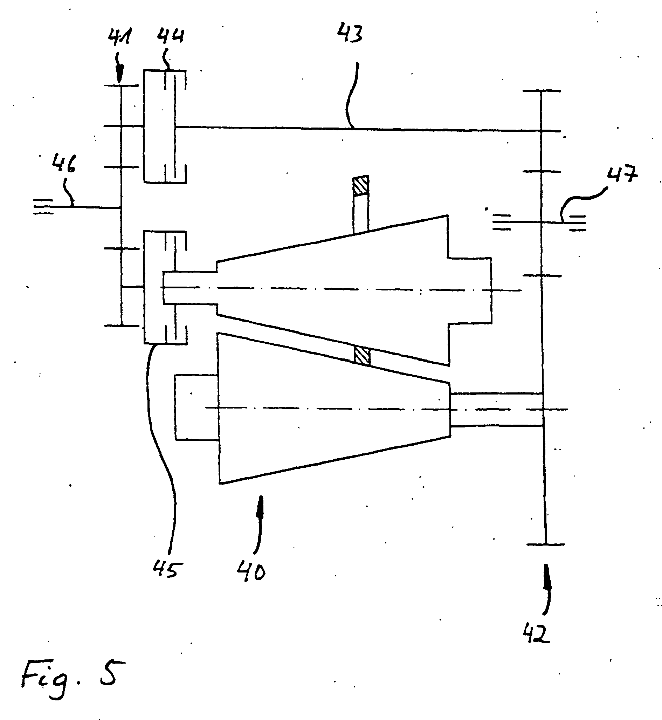

Auch das in Figur 5 dargestellte Getriebe umfasst als stufenlos einstellbares Teilgetriebe ein Kegelreibringgetriebe 40, wobei dem Kegelreibringgetriebe 40 antriebsseitig ein Leistungsteiler 41 und abtriebsseitig ein Leistungsteiler 42 zugeordnet ist. Hierbei ist über die Leistungsteiler 41 und 42 ein erster Gang 43 dem Kegelreibringgetriebe 40 parallel geschaltet, wobei diese abtriebsseitig, wie bereits vorstehend beschrieben, synchronisiert sind und über Reibungskupplungen 44, 45 wahlweise in den Antriebsstrang zwischen Antrieb 46 und Abtrieb 47 geschaltet werden können.

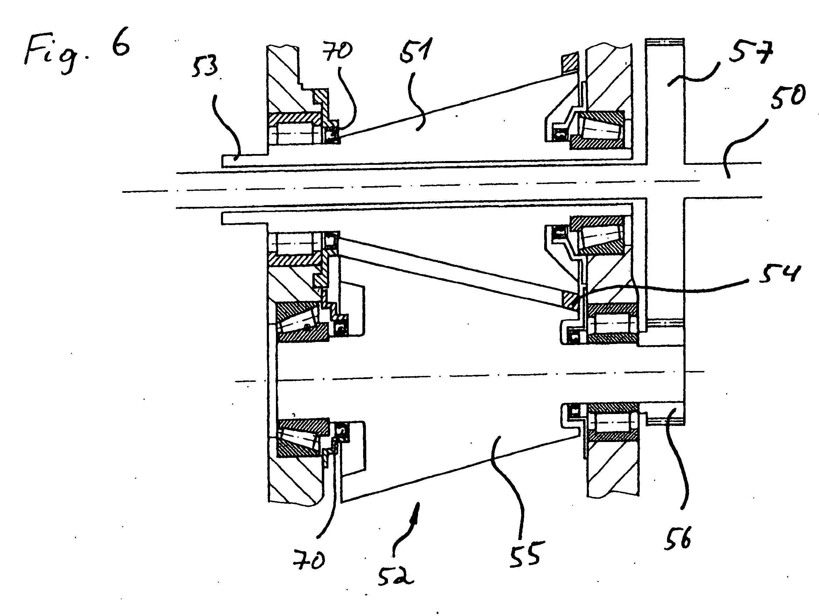

Das in Figur 6 dargestellte Ausführungsbeispiel zeigt eine koaxiale Anordnung von An- und Abtrieb, die bei einem stufenlosen Getriebe, insbesondere bei einem Kegelreibringgetriebe, vorteilhaft einen beidseitigen koaxialen Abtrieb realisiert. Dieses führt einerseits zu verhältnismäßig geringen Gehäusebelastungen und baut andererseits äußerst kompakt, wobei vorzugsweise ― und insbesondere bei diesem Ausführungsbeispiel ― eine Abtriebswelle 50 den Antriebskegel 51 eines Kegelreibringgetriebes 52 durchstößt. Diese Anordnung ist auch bei anderen stufenlosen Getriebearten insbesondere im Zusammenspiel mit Elektromotoren vorteilhaft, wobei in letzterem Fall die Abtriebswelle auch die Ankerwelle des Elektromotors durchstoßen kann.

Insofern treibt ein nicht dargestellter Motor über einen Antrieb 53 bei diesem Ausführungsbeispiel den antreibenden Kegel 51 an, welcher seinerseits über einen Reibring 54 auf einen abtreibenden Kegel 55 wirkt. Dieser ist über ein Ritzel 56 mit einem Abtriebsrad 57 wirkverbunden, welches auf der Abtriebswelle 50 sitzt.

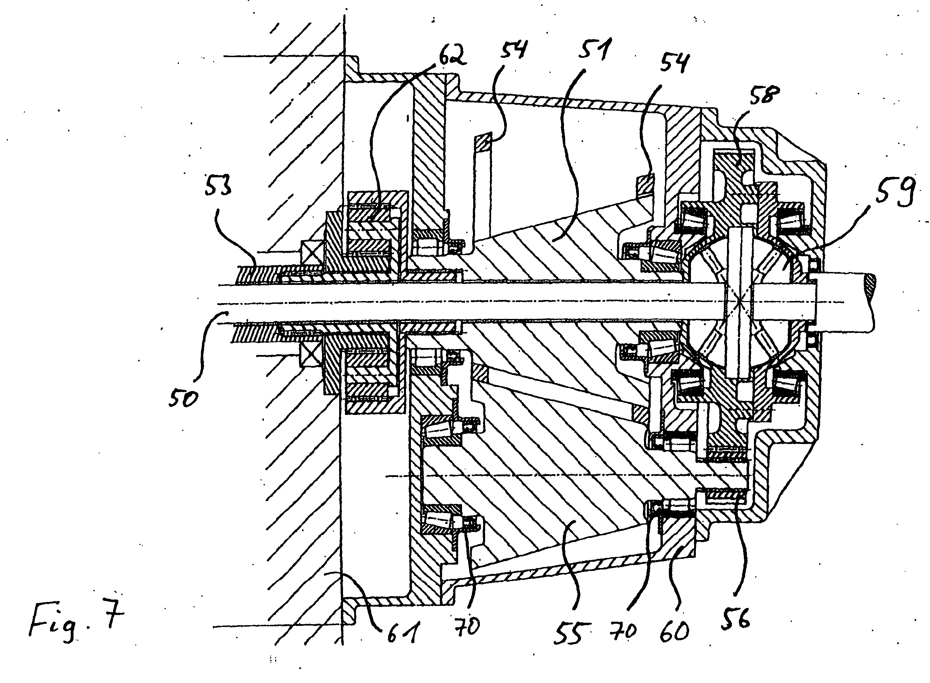

Einen ähnlichen Aufbau weist das in Figur 7 dargestellte Getriebe auf, dessen Gehäuse 60 an ein Gehäuse 61 eines Elektromotors angesetzt ist. Auch bei diesem Ausführungsbeispiel ist die Ankerwelle 53 hohl ausgebildet und wird von der Abtriebswelle 50 durchstoßen. Das Abtriebsritzel 56 kämmt jedoch mit einem Antriebsrad 58 eines Differentials 59, welches seinerseits mit der zweigeteilten Antriebswelle 50 verbunden ist. Da ohnehin ein Zahnrad an dieser Stelle vorgesehen sein muss, baut diese Anordnung äußerst kompakt.

Darüber hinaus weist diese Anordnung ergänzend zwischen Motor und stufenlosem Getriebe ein Planetengetriebe 62 zur Drehmomentsreduktion auf, um das stufenlos einstellbare Getriebe nicht zu überlasten.

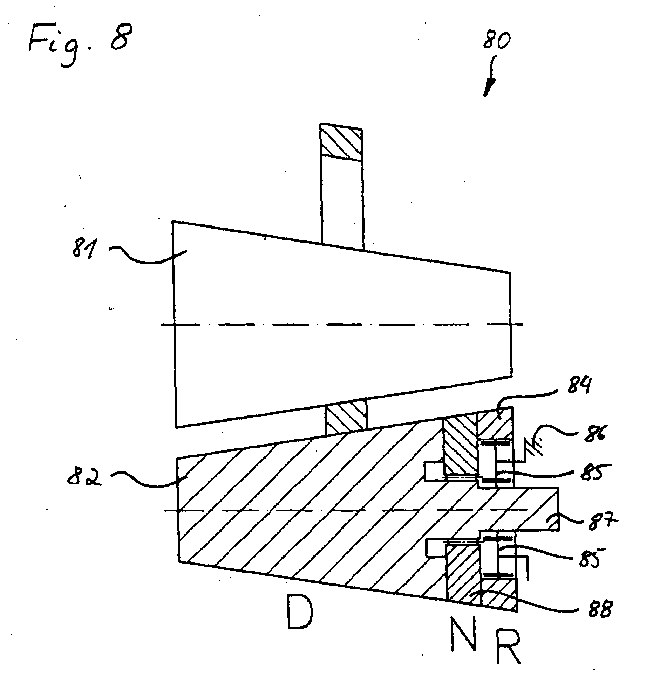

Die in Figur 8 dargestellte Kegelreibringanordnung 80 kann insbesondere im Zusammenspiel mit den Anordnungen nach Figuren 5, 6 und 7 zur Anwendung kommen und auf äußerst kompakte Weise einen Rückwärtsgang realisieren, wobei dieses Getriebe 80 zwei Kegel 81 und 82 umfasst, die über einen Ring 83 miteinander wechselwirken. Der Kegel 82 weist neben einem normalen Kegelbereich (D) einen gegensinnig umlaufenden Bereich (R) auf, was bei diesem Ausführungsbeispiel durch einen Kegelring 84 umgesetzt ist, der um Planeten 85 umläuft, die ihrerseits fest in dem Getriebegehäuse 86 gelagert sind und mit ihren Innenseiten an einer Kegelwelle 87 des Kegels 82 wälzen. Auf diese Weise rotiert der Kegelring 84 gegensinnig zum restlichen Teil des Kegels 82. Darüber hinaus weist der Kegel 82 einen neutralen Bereich (N) auf, der einen Ring 88 umfasst, welcher seinerseits frei drehbar an der Kegelwelle 87 gelagert ist.

Bei dieser Anordnung kann der Reibring 83 vom Hauptbereich (D) des Kegels 82 zunächst in den neutralen Bereich (N) verschoben werden, wobei sich der Kegelring 88 der durch den Hauptkegel 82 und den Reibring 83 vorgegebenen Rotation anpasst. Wird der Reibring 83 weiter in Richtung auf den rückwärtslaufenden Bereich (R) verlagert, so verlässt er andererseits den Hauptbereich (D), sodass sich die Drehrichtung des neutralen Bereichs (N) der Drehrichtung des rückwärtslaufenden Ringes 84 anpassen kann. Auf diese Weise wird äußerst kompakt ein Rückwärtsgang realisiert.

Ein derartiger Rückwärtsgang 80, bzw. auch eine ansich in bekannter Weise ausgestaltete Anordnung zur Drehrichtungsumkehr, kann insbesondere mit dem in Figur 4 dargestellten Ausführungsbeispiel vorteilhaft sein, da hierdurch, wenn die Leistungs- und/oder Drehzahlteiler bzw. -addierer 41 bzw. 42 geeignet verschaltet und die Übersetzungsverhältnisse geeignet gewählt sind, ein Stillstand der Ausgangswelle 47 realisiert werden kann, obwohl das Kegelreibringgetriebe 40 und die Welle 43 rotieren. Auf diese Weise können bei einem Fahrzeug alle Fahrsituationen, also Rückwärtsfahrt, Vorwärtsfahrt und Stillstand, übergangslos ohne weitere Kupplungen realisiert werden, wobei für zusätzliche Fahrsituationen, wie beispielsweise Volllast- oder Dauerlastbetrieb Kupplungen oder weitere Getriebestufen durchaus vorgesehen sein können.

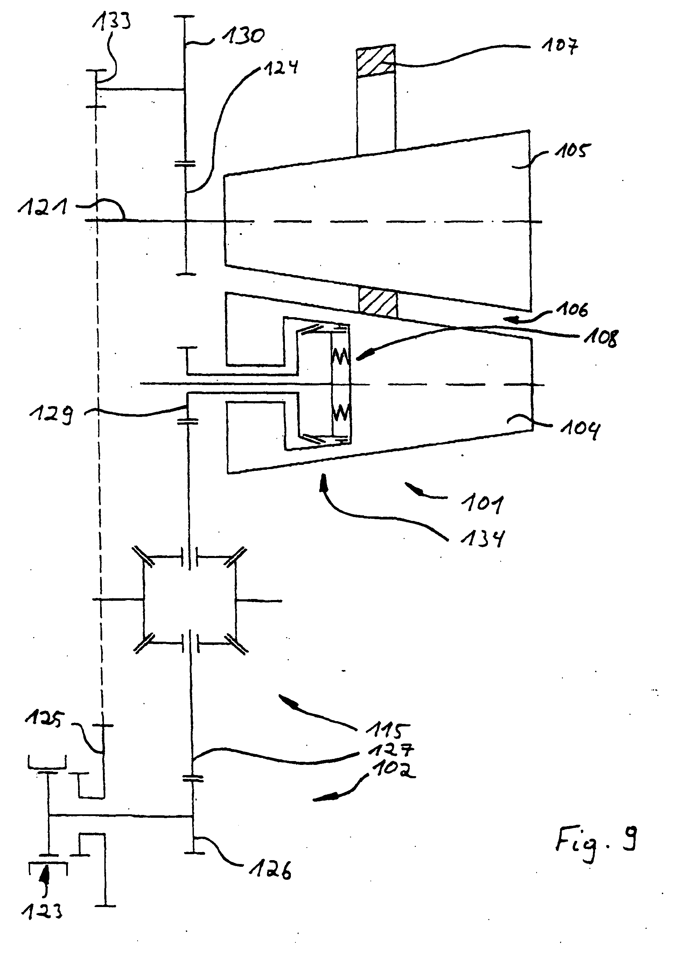

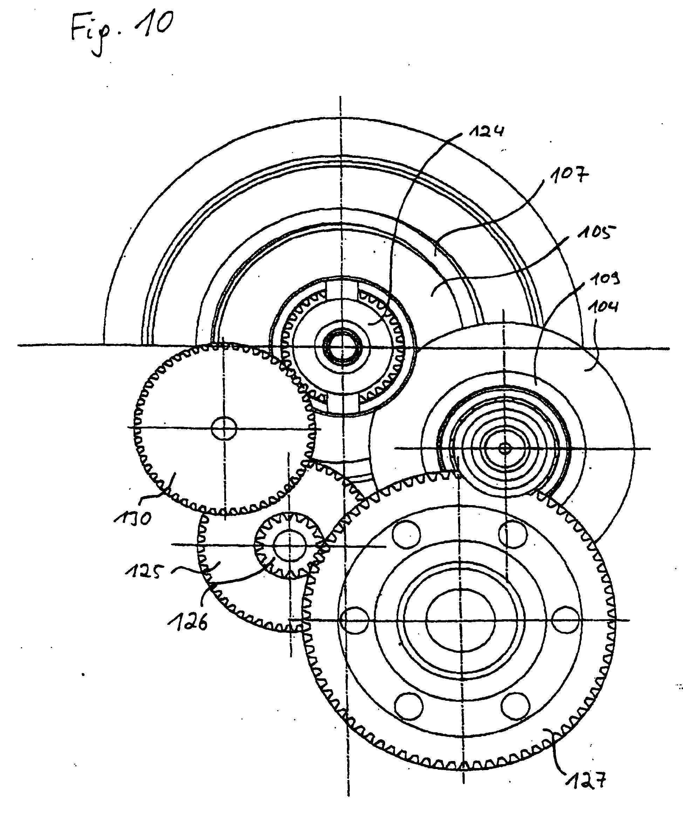

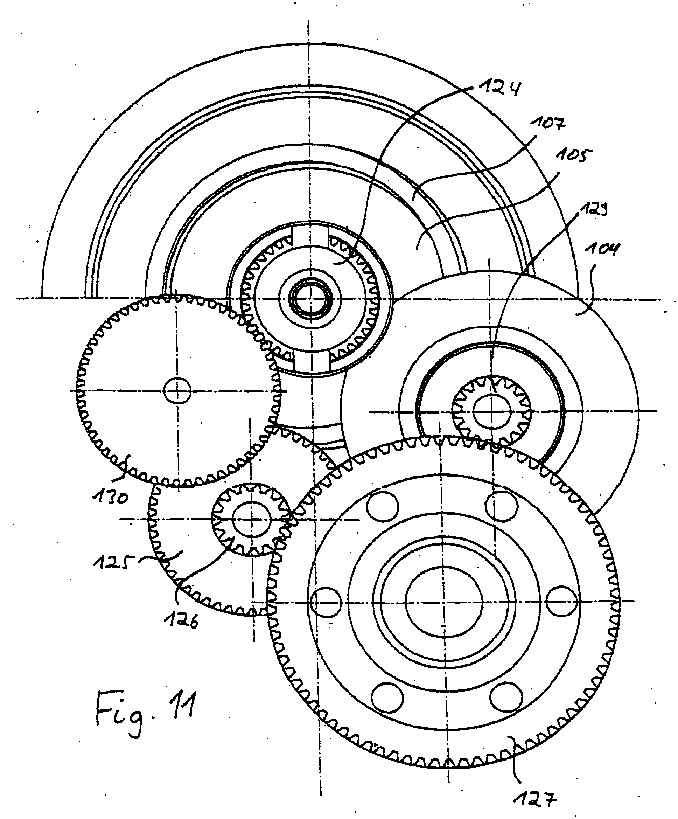

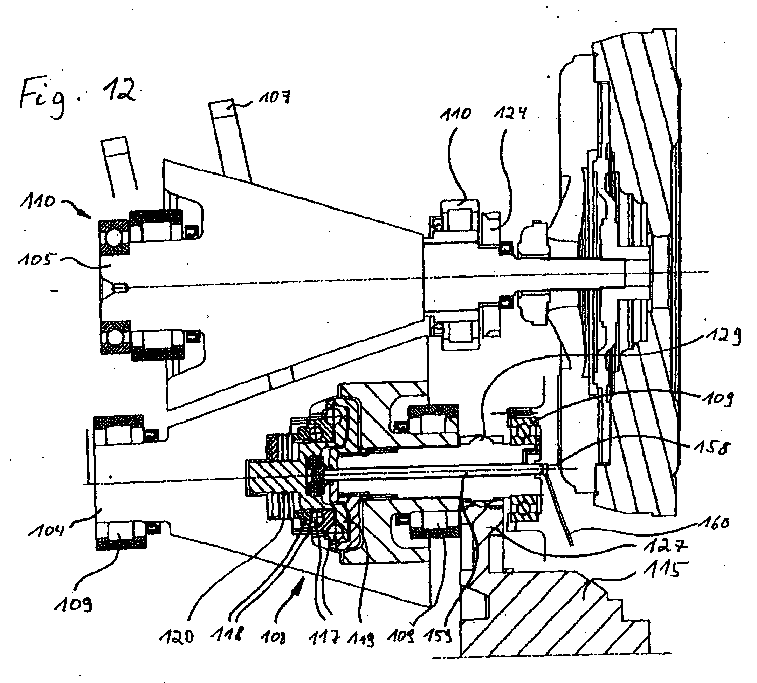

Bei der in Figuren 9 bis 16 dargestellten Anordnung, die im Wesentlichen der Anordnung nach Figuren 1 bis 3 entspricht, so dass auf wiederholende Erläuterungen verzichtet wird, sind zwei Getriebestränge 101, 102 vorgesehen, die wahlweise über ein synchronisiertes Schaltgetriebe 123 bzw. eine Kegelkupplung 134 in einen Antriebsstrang geschaltet werden können. Hierbei weist der erste Getriebestrang 101 wiederum ein Kegelreibringgetriebe mit zwei gegenläufig angeordneten Kegeln 104, 105 auf, die derart angeordnet sind, dass ein Spalt 6 zwischen den Kegeln 104, 105 verbleibt, in welchem ein Reibring 107 den Kegel 105 umgreifend läuft. Damit dieses Kegelreibringgetriebe Drehmomente übertragen kann, umfasst der Kegel 104 eine Anpresseinrichtung 108, welche die beiden Kegel 104 und 105 in an sich bekannter Weise bzw. vorgeschriebener Weise zwischen Verspannlagern 109, 110 unter Aufbringen einer variablen Anpresskraft verspannt. Hierzu weist die Anpresseinrichtung zwei Wälzelemente 117 sowie Führungskörper 118 und 119 auf, die über Tellerfedern 120 verspannt werden und über welche, wie nachstehend erläutert werden wird, eine vom Drehmoment abhängige Anpresskraft aufgebracht wird, indem die Anpresseinrichtung 108 vom Drehmoment abhängig expandiert und sich gegen die Lager 109, 110 entsprechend abstützt.

Wie insbesondere aus Figur 9 ersichtlich, umfasst der Rückwärtsgang ein Antriebsrad 124, mit welchem der Getriebestrang 102 von dem Hauptgetriebestrang abgezweigt wird. Über Zwischenräder 130 und 133 wird ein Schaltrad 125 angetrieben, welches über das synchronisierte Schaltgetriebe 123 mit dem Ritzel 126 gekoppelt werden kann, welches seinerseits unmittelbar mit dem Außenrad 127 des Hauptdifferenzials 115 kämmt. Die Gesamtanordnung baut äußerst kompakt und kann noch kompakter ausgestaltet werden, wenn das Antriebsrad 124 über ein synchronisiertes Schaltgetriebe mit der Antriebswelle 121 verbindbar ist und unmittelbar mit dem Außenrad 127 kämmt.

Neben diesem Rückwärtsgang 102 umfasst die Anordnung einen Vorwärtsgang, der durch das stufenlose Getriebe 101 realisiert ist. Der Vorwärtsgang wird über das Ritzel 129 mit dem Außenrad 127 und so mit dem Rückwärtsgang 102 gekoppelt und ist über die Kupplung 134 zu- bzw. abschaltbar. Wie unmittelbar ersichtlich, laufen auch in ausgekuppeltem Zustand die jeweiligen Getriebeglieder der Teilgetriebestränge 101 und 102 frei mit.

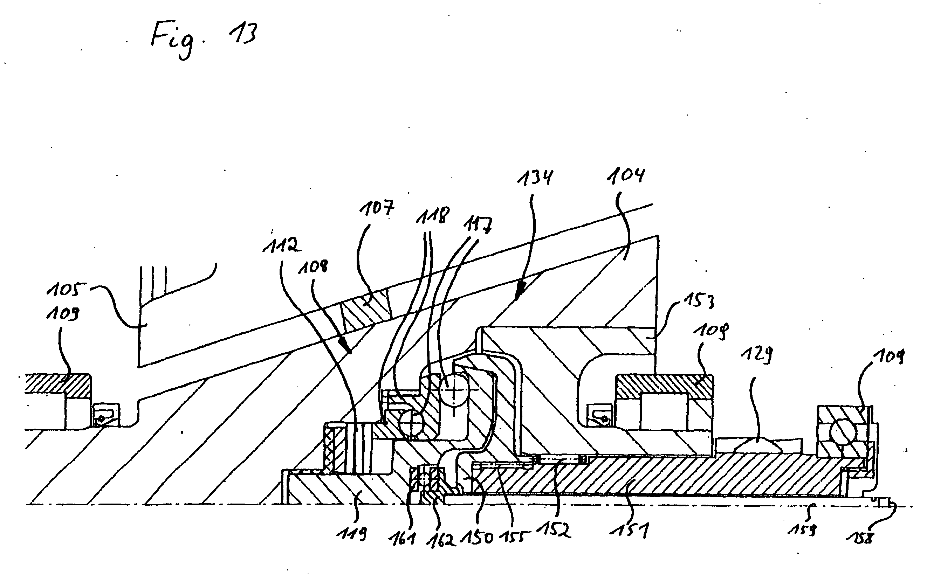

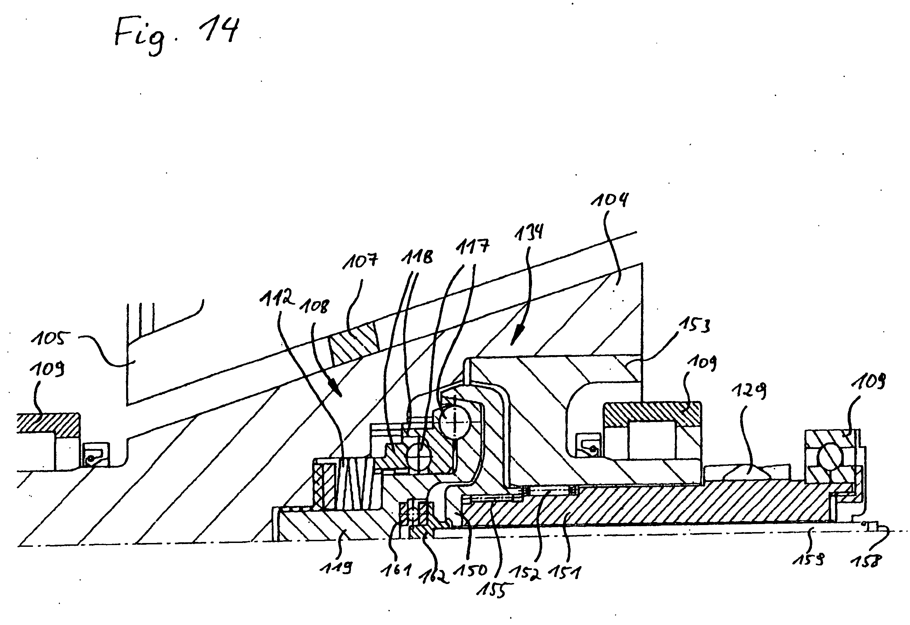

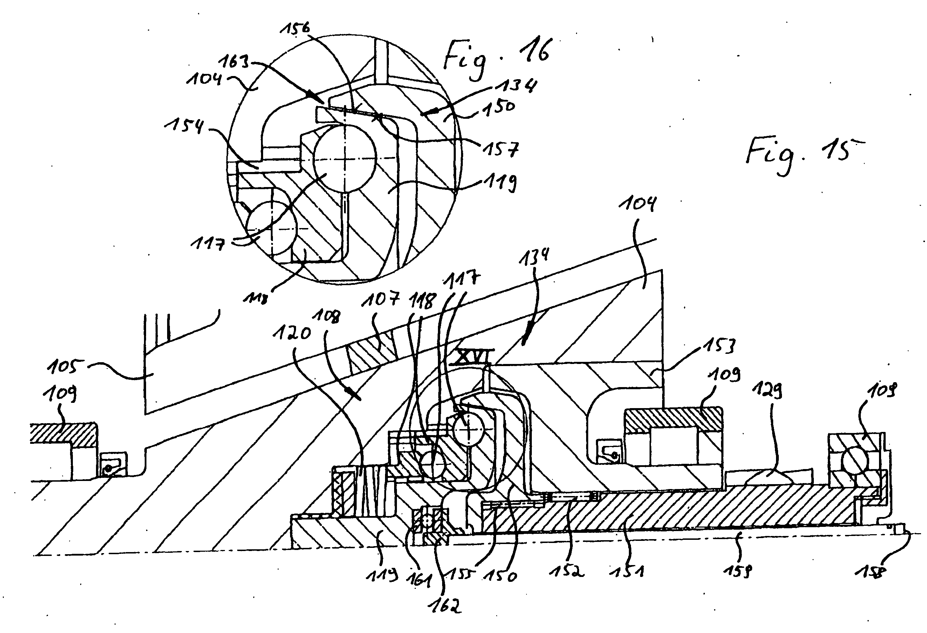

Wie bereits vorstehend angedeutet, arbeitet die Anpresseinrichtung 108 gemeinsam mit der Kupplung 134 zusammen. Die Wirkungsweise ist anhand der Figuren 13 bis 16 am ehesten nachvollziehbar. Wie in den Figuren 13 und 14 dargestellt, kann die Anpresseinrichtung 108 in Abhängigkeit vom übertragenen Drehmoment expandieren. Hierbei zeigt Figur 13 die Anordnung bei einem hohen Drehmoment und somit bei hohen Anpresskräften und Figur 14 die Anordnung bei niedrigen Anpresskräften. Im wesentlichen wird die Drehmoment abhängige Anpresskraft dadurch erzeugt, dass sich der Stützkörper 119 über einen Gegenkörper 150 und über eine Abtriebswelle 151 an dem Verspannlager 109 abstützt. Auf der Welle 151 sitzt auch das Abtriebsritzel 129. Darüber hinaus ist die Welle 151 über einen Nadellager 152 an einem Zentrierkörper 153 radial gelagert. Vom Abtriebskegel 104 wird über eine Verzahnung 154 (siehe Figur 16) und 155 Drehmoment auf das Abtriebsritzel 129 übertragen.

In der Anpresseinrichtung 108 bewirken diese Drehmomente eine Verlagerung der Kugeln 117, so dass die Anpresskraft in gewünschter Weise variiert werden kann, wie in Figuren 13 und 14 ersichtlich. Wie unmittelbar aus den Figuren 13 bis 16 ersichtlich, liegen die beiden Körper 119 und 150 jeweils über Kegelflächen 156, 157 (siehe Figur 16) aneinander an. Letztlich bilden die beiden Kegelflächen 156, 157 die wirksame Kupplung 134, die durch die Anpresseinrichtung 108 verschlossen wird. Zum Öffnen der Kupplung 134 weist die Gesamtanordnung einen Gehäuse festen Zylinder 158 auf, in dem ein Kolben 159 läuft, der über eine Hydraulikleitung 160 mit einem Druck beaufschlagbar ist. Der Kolben 159 ist über ein Axiallager 161 und einen Stützkörper 162 an dem Stützkörper 119 gelagert. Wird nunmehr der Kolben 159 mit einem Druck beaufschlagt, so entlastet er den Körper 150 der Kupplung 134 von der Anpresskraft der Anpresseinrichtung 108. Sowie sich die Kupplung 134 öffnet, wird kein Drehmoment mehr übertragen, so dass sich die Anpresseinrichtung 108 entspannt, es muss somit lediglich ein sehr geringer Druck aufgebracht werden, um die Kupplung 134 zu öffnen bzw. geöffnet zu halten. Bei geöffneter Kupplung 134 verbleibt zwischen den Kegelflächen 156, 157 ein Spalt 163, wie aus Figur 16 ersichtlich. Es versteht sich, dass statt des Kolbens 159 sowie der Hydraulik 160 auch andere Maßnahmen vorgesehen sein können, durch welche der Körper 119 entlastet und die Kupplung 134 geöffnet werden kann. Geeignet ist insbesondere jede Maßnahme, mit welcher der Körper 119 unter Umgehung der Kupplung 134 am Gehäuse des gesamten Getriebes abgestützt werden kann.

Die in Figuren 13 bis 16 dargestellte Anordnung zeichnet sich insbesondere dadurch aus, dass der Kolben 159 nicht mitdreht, so dass eine verhältnismäßig kostengünstige Abdichtung erfolgen kann.

Die Anordnung hat insbesondere den Vorteil, dass zum Schließen der Kupplung keine zusätzlichen Einrichtungen benötigt werden. Darüber hinaus sind die Schließkräfte vom übertragenen Drehmoment abhängig und steigen mit diesem, da die Anpresseinrichtung diesbezüglich ohnehin entsprechend ausgerüstet ist.

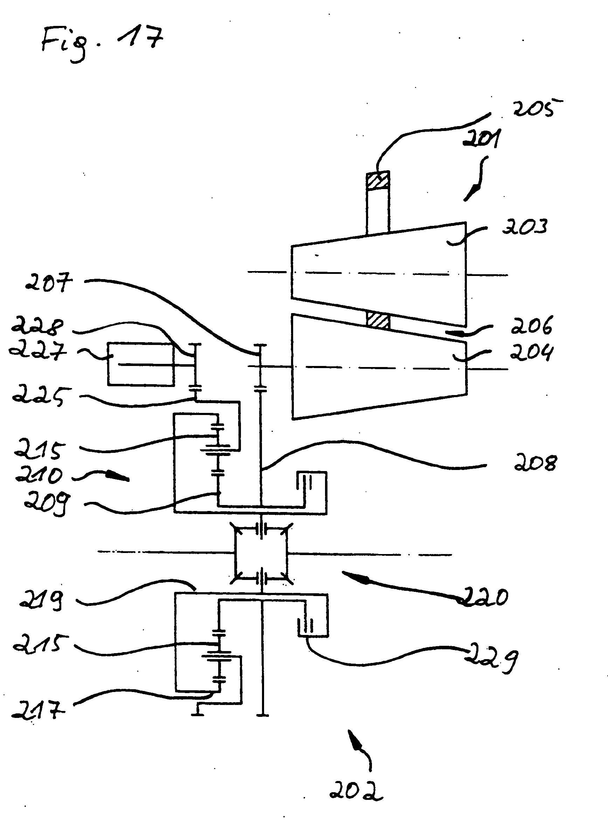

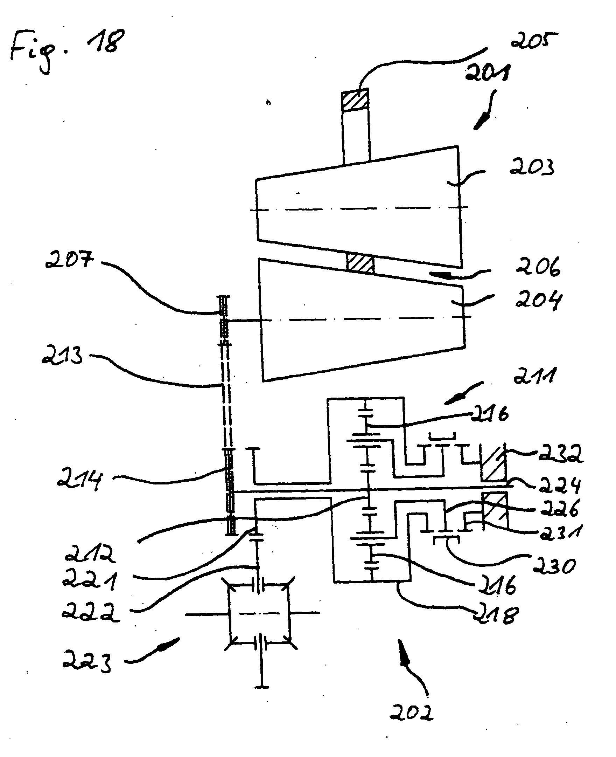

Die in den Figuren 17 und 18 dargestellten Anordnungen umfassen jeweils ein Kegelreibringgetriebe 201 und einen hiermit in Reihe geschalteten Rückwärtsgang 202. Bei diesen Ausführungsbeispielen sind die Kegelreibringgetriebe 2011 an sich im Wesentlichen identisch aufgebaut und weisen jeweils einen Eingangskegel 203 und einen Ausgangskegel 204 auf, die axial parallel, aufeinander zugerichtet angeordnet sind und zwischen denen ein Reibring 205 in einem Spalt 206 verlagerbar ist, sodass in Abhängigkeit von der Position des Reibringes 205 ein variables Übersetzungsverhältnis eingestellt werden kann. Der Reibring 205 umgreift bei diesen Ausführungsbeispielen den Antriebskegel 203, während der Abtriebskegel 204 ein Abtriebsritzel 207 trägt. Es versteht sich, dass je nach konkreter Ausgestaltung die Kegelreibringgetriebe auch abweichend ausgebildet sein können.

Bei dem Ausführungsbeispiel nach Figur 17 kämmt das Abtriebsritzel 207 unmittelbar mit einer Baugruppe 208, welche das Sonnenrad 209 eines Planetengetriebes 210 trägt. Auch die in Figur 18 dargestellte Anordnung umfasst ein Planetengetriebe 211 mit einem Sonnenrad 212, welches von dem Abtriebsritzel 207 angetrieben wird. Dieses erfolgt über einen Riemen 213 und ein mit dem Sonnenrad 212 umlaufendes Rad 214. Als Riemen 213 können sämtliche bekannten Riemen- bzw. Kettenanordnungen, durch welche eine ausreichend betriebssichere Kraftübertragung dauerhaft gewährleistet werden kann, zur Anwendung kommen.

Beide Planetengetriebe 210 und 211 weisen jeweils Planetenräder 215 bzw. 216 auf, die einerseits mit dem jeweiligen Sonnenrad 209 bzw. 212 und andererseits mit einem jeweiligen Außenrad 217 bzw. 218 kämmen.

Bei der Ausführungsform nach Figur 17 ist das Außenrad 217 unmittelbar mit dem umlaufenden Gestell 219 eines Differentials 220 verbunden. Insofern liegt bei dieser Anordnung das Planetengetriebe 210 und somit der Rückwärtsgang 202 unmittelbar auf dem Differenzial 220. Diese Anordnung erweist sich aus diesem Grunde als außerordentlich kompakt in ihrer Bauweise und extrem hoch in ihrem Wirkungsgrad, da die Zahl der Getriebeglieder im Antriebsstrang minimiert ist. Es versteht sich, dass ein unmittelbar auf dem Differential 220 angeordneter Rückwärtsgang 202 auch unabhängig von den übrigen Merkmalen vorliegender Erfindung wegen der kompakten Bauweise vorteilhaft ist. Im übrigen ist eine Anordnung, bei welcher das Abtriebsritzel 207 unmittelbar mit einem Eingangsrad eines Rückwärtsgangs kämmt und das Ausgangsrad des Rückwärtsgangs direkt mit dem umlaufenden Gestell eines Differenzials verbunden ist, wegen der durch ein Kegelreibringgetriebe bedingten Richtungsumkehr für gängige Kraftfahrzeugsmotoren vorteilhaft, da eine derartige Anordnung nur eine minimale Anzahl an Getriebegliedern verlangt und somit einen äußerst hohen Wirkungsgrad aufweist.

Bei der Ausführungsform nach Figur 18 hingegen ist das Außenrad 218 mit einem Abtriebsrad 221 verbunden und läuft mit diesem um, welches seinerseits mit dem umlaufenden Gestell 222 eines Differentials 223 kämmt. Die hierdurch bedingte Richtungsumkehr wird durch die Riemenanordnung 213 kompensiert, wobei bei dem Ausftihrungsbeispiel nach Figur 18 der Rückwärtsgang auf einer bzw. um eine Zwischenwelle 224 angeordnet ist. Eine Anordnung auf der Zwischenwelle 224 hat gegenüber der in Figur 17 vorgeschlagenen Anordnung unmittelbar auf dem Differential 220 den Vorteil, dass die Gesamtanordnung nach Figur 18 flexibler in ihrer räumlichen Anordnung ausgestaltet werden kann. Dieses ist insbesondere für Umgebungen vorteilhaft, bei denen durch dritte Baugruppen die Raumverhältnisse unmittelbar in der Nähe des Differentials begrenzt sind. Es versteht sich, dass die Anordnung des Rückwärtsgangs auf einer Zwischenwelle 224 ― insbesondere auch wegen des hierdurch bedingten Drehrichtungswechsels ― auch unabhängig von den übrigen Merkmalen vorliegender Erfindung vorteilhaft ist. Letzteres gilt insbesondere dann, wenn Kegelreibringgetriebe im Zusammenspiel mit ausländischen Motoren, die einen gegenläufigen Drehrichtungssinn haben, zur Anwendung kommen sollen. In derartigen Fällen kann auf die Riemenanordnung 213 verzichtet werden und das Ritzel 207 mit dem Kranz 214 kämmen. Des weiteren kann es vorteilhaft sein, wenn der Abtriebskegel 204 unmittelbar auf der Welle 224 angeordnet ist, sodass auf ein separates Abtriebsritzel 207 sowie die Riemenanordnung 213 zur Gänze verzichtet werden kann.

Es ist dem Fachmann darüber hinaus unmittelbar einsichtig, dass der Antrieb von dem Kegelreibringgetriebe 201 ausgehend statt über die Sonnenräder 209 bzw. 212 auch über die Außenräder 217 bzw. 218 bzw. über andere Getriebeglieder des Rückwärtsganges erfolgen kann. Ebenso muss nicht zwingend der Abtrieb des Rückwärtsganges über die Außenräder 217 bzw. 218 erfolgen. Vielmehr können hierzu auch die Sonnenräder bzw. andere Getriebeglieder genutzt werden.

Damit die in Figuren 17 und 18 dargestellten Ausführungsbeispiele betriebssicher ihre Zustände "vorwärts" bzw. "rückwärts" einhalten können, sind jeweils Festlegesysteme vorgesehen, mit denen ein Getriebeglied und zwar bei diesen Ausführungsbeispielen ein mit den Planeten umlaufendes Gestell 225 bzw. 226, an welchem die Planeten 215 bzw. 216 gelagert sind, starr festlegbar ist. Des weiteren sind Festlegesysteme vorhanden, die ein Festlegen zweier Getriebeglieder des jeweiligen Planetengetriebes 210 bzw. 211 untereinander ermöglichen. Hierbei werden bei dem Ausführungsbeispiel nach Figur 17 Sonnenrad 209 und Außenrad 217 und bei dem Ausführungsbeispiel nach Figur 18 Außenrad 218 und umlaufendes Gestell 226 der Planeten 216 wahlweise miteinander festgelegt.

Zum Festlegen der Getriebeglieder am Gehäuse bzw. untereinander können verschiedene Festlegesysteme, wie Kupplungen, auflaufenden Bremsen bzw. Synchronisierungen zur Anwendung kommen. Hiervon sind drei beispielhaft bei den dargestellten Ausführungsbeispielen vorgesehen, wobei diese, je nach konkreten Anforderungen, ohne weiteres ausgetauscht werden können.

Bei dem Ausführungsbeispiel nach Figur 17 wird das Gestell 225 der Planeten 215 mittels einer elektromagnetischen Bremse 227 festgelegt, welche ein Bremsritzel 228 wahlweise bremsen kann, welches seinerseits mit dem Gestell 225 der Planeten 215 kämmt. Soll somit bei dieser Anordnung die Drehrichtung geändert werden, so wird die Bremse aktiviert, sodass in dem Maße, in dem das Gestell 225 gegenüber dem Sonnenrad 209 und dem Außenrad 217 verlangsamt wird, die Fahrt bzw. Drehzahl des Abtriebs abnimmt bis sie schließlich zum Stillstand kommt und dann die Richtung wechselt.

Das Festlegen von Außenrad 217 und Sonnenrad 209 erfolgt über eine Kupplung 229, wobei hierdurch auch die Planetenräder 215 bezüglich Außenrad 217 und Sonnenrad 209 festgelegt werden. Da in diesem Zustand das Planetengetriebe 210 äußerst verlustarm läuft, ist dieser Zustand vorzugsweise als Vorwärtsgang gewählt, wobei es unmittelbar ersichtlich ist, dass eine der Kupplung 229 entsprechende Kupplung auch beispielsweise zwischen Gestell 225 und Sonnenrad 209 und/oder Außenrad 217 vorgesehen sein kann. Ebenso kann es ausreichen, die Planeten 215 lediglich an ihrer Rotation bezüglich des Gestells 225 zu hindern, um das Planetengetriebe 210 an sich entsprechend still zu legen und als Ganzes umlaufen zu lassen.

Bei dem Ausführungsbeispiel nach Figur 18 erfolgt das wahlweise Festlegen über eine Synchronisation 230, mittels welcher das die Planeten 216 tragende und mit diesen umlaufende Gestell 226 wahlweise mit dem Außenrad 218 oder bezüglich eines feststehenden Rades 231, welches bei diesem Ausführungsbeispiel am Gehäuse 232 festgelegt ist, synchronisiert werden kann. Die hierbei auftretenden Mechanismen entsprechen den Mechanismen, wie sie bereits des Ausführungsbeispieles in Figur 18 erläutert wurden, wobei es sich versteht, dass das Gestell 226 auch mit dem Sonnenrad 212 statt mit dem Außenrad 218 synchronisiert werden kann.

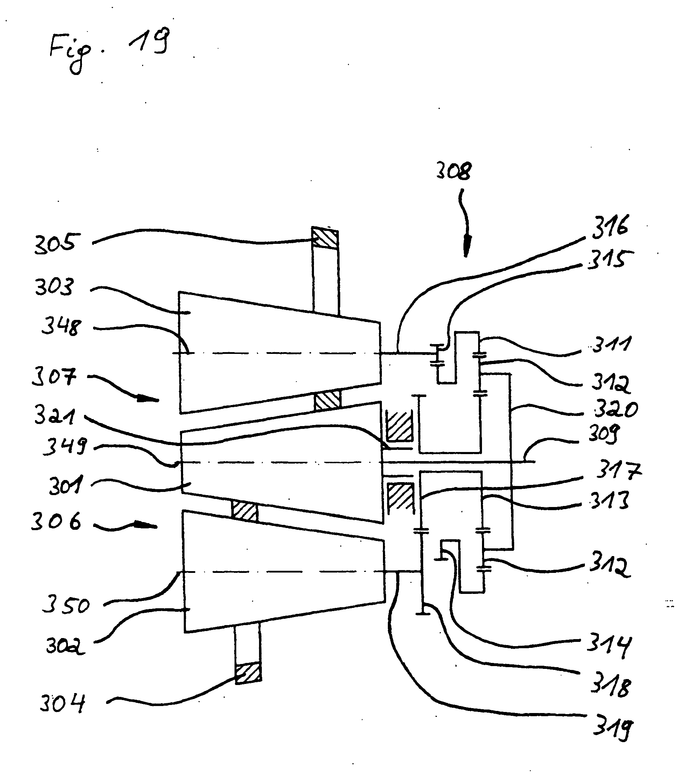

Das in Figur 19 dargestellte stufenlos einstellbare Getriebe weist einen Eingangskegel 301 sowie zwei Ausgangskegel 302, 303 auf, die jeweils über um die jeweiligen Ausgangskegel 302, 303 umlaufende Reibringe 304, 305 mit dem Eingangskegel 301 gekoppelt sind. Durch Verlagern der Reibringe 304, 305 entlang der zwischen den Kegeln 301, 302, 303 verbleibenden Spalte können die durch die Kegel 301 und 302 bzw. 301 und 303 gebildeten Teilgetriebe 306 bzw. 307 stufenlos eingestellt werden.

Ausgangsseitig sind die beiden Teilgetriebe 306, 307 bzw. die beiden Ausgangskegel 302, 303 über ein Summengetriebe 308 auf eine Ausgangswelle 309 geschaltet. Bei dem in Figur 19 dargestellten Ausführungsbeispiel umfasst das Summengetriebe 308 ein Planetengetriebe mit einem Außenkranz 311, Planetenrädern 312 und einem Sonnenrad 313. Der Außenkranz 311 ist mit einem weiteren Kranz 314 fest verbunden, welcher seinerseits mit einem Ritzel 315 kämmt, welches auf der Abtriebswelle 316 des Kegels 303 angeordnet ist. Ebenso ist das Sonnenrad 313 mit einem Rad 317 fest verbunden und läuft mit diesem um, welches seinerseits mit einem Ritzel 318 kämmt, welches auf der Abtriebswelle 319 des Kegels 302 angeordnet ist. Die Planetenräder 312 sind des Weiteren in einem Gestell 320 gelagert, welches mit der Abtriebswelle 309 verbunden ist und gemeinsam mit der Abtriebswelle 309 und den Planetenrädern 312 umläuft. Somit ist ein Summengetriebe 308 bereitgestellt, bei welchem die Drehzahlen der Ritzel 315, 318 bzw. der Abtriebskegel 302, 303 je nach Übersetzungsverhältnis sowie Position der Reibringe 304, 305 zur Gesamtdrehzahl der Welle 309 aufsummiert werden. Vorzugsweise sind die Übersetzungsverhältnisse derart gewählt, dass bei identischer Position der Reibringe 304, 305, also gleicher Drehzahl der beiden Abtriebskegel 302, 303, die Planetenräder 312 hinsichtlich ihrer Eigenrotation in dem Gestell 320 stillstehen und lediglich gemeinsam mit dem Außenkranz 311 und dem Sonnenrad 313 umlaufen. Auf diese Weise lassen sich Verluste gerade im Dauerbetrieb minimieren. Zur Verlustminimierung dient darüber hinaus eine Kupplung 321, mit welcher die Abtriebswelle 309 unmittelbar, oder nach konkreter Ausführungsform über ein Übersetzungsgetriebe, mit dem Antriebskegel 301 verbunden werden kann, so dass insbesondere bei hohen und verhältnismäßig gleichförmigen Geschwindigkeiten, bei welchen die Vorzüge eines stufenlos einstellbaren Getriebes ohnehin nicht genutzt werden können und derartige stufenlos einstellbare Getriebe zu unnötigen Verlusten führen, die beiden Teilgetriebe 306, 307 überbrückt werden können.

Wie unmittelbar ersichtlich, addiert das Summengetriebe 308 die Drehzahlen der beiden Kegel 302, 303 auf und dient im Übrigen als Drehmomentwaage für die an diesem Kegel 302, 303 anfallenden Drehmomente.

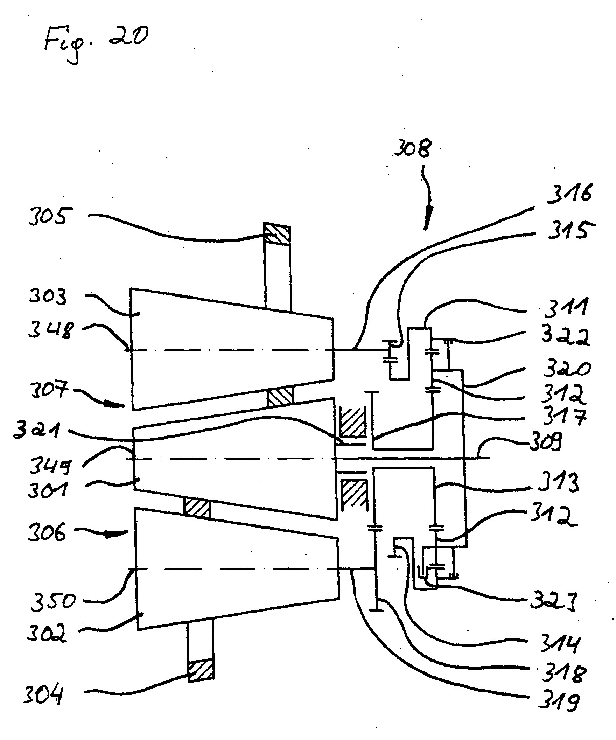

Das in Figur 20 dargestellte Ausführungsbeispiel entspricht im Wesentlichen dem Ausführungsbeispiel nach Figur 19, so dass identisch wirkende Baugruppen auch identisch beziffert sind und auf eine Wiederholung der identischen Funktionalitäten verzichtet wird. Über das Ausführungsbeispiel nach Figur 19 hinausgehend weist das Ausführungsbeispiel nach Figur 20 einerseits eine Feststellkupplung 322, mittels welcher das umlaufende Gestell 320 der Planetenräder 312 an dem Außenkranz 311 festgelegt werden kann, und andererseits eine Kupplung 323, mittels welcher das Gestell 320 sowie die Abtriebswelle 309 an einem im Übrigen nicht näher dargestellten, feststehenden Kupplungsgehäuse festgelegt werden kann, auf. Erstere Kupplung 322 dient dazu, den Stillstand der Planetenräder 312 in Eigenrotation in gegebenen Betriebszuständen zu erzwingen, so dass Verluste durch die Planetenräder 312 vermieden werden und das Gehäuse 320 sowie die Welle 309 gemeinsam mit dem Außenkranz 311 sowie dem Sonnenrad 313 umlaufen. Zweitere Kupplung 323 dient dazu, die Planetenräder 312 ortsfest, aber um ihre eigenen Achsen rotierbar zu halten. Diese Anordnung ist insbesondere für ein Zusammenspiel mit einem Getriebe vorgesehen, bei welchem das Getriebe derart ausgelegt ist, dass der Außenkranz und das Sonnenrad 313 auch gegensinnig umlaufen können bzw. gegensinnig umlaufen. Dieses kann beispielsweise durch ein zusätzliches, zwischengeschaltetes Zahnrad oder aber durch einen separaten Rückwärtsgang im Getriebestrang zwischen wenigstens einem der Teilgetriebe 306, 307 und dem Summengetriebe 308 realisiert werden. Bei einer derartigen Anordnung kann das Summengetriebe 308 über die beiden Teilgetriebe 306, 307 derart angesteuert werden, dass an der Welle 309 eine Drehzahl von 0 resultiert, obgleich der Antriebskegel 301 rotiert. In diesem Zustand kann die Kupplung 323 zum Festlegen des Getriebes genutzt werden. Bei einer derartigen Anordnung ist dann ein Anfahren der Abtriebswelle 309 lediglich durch ein Verstellen der Reibringe 304, 305 bzw. durch ein Verstellen der Teilgetriebe 306, 307 möglich.

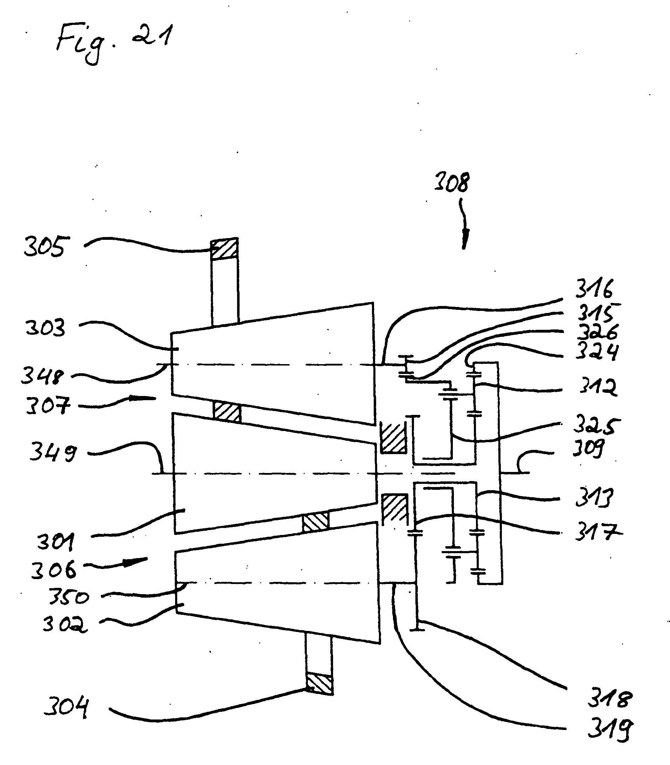

Auch die in Figur 21 dargestellte Anordnung entspricht im Wesentlichen der Anordnung nach Figur 19. Insofern sind die Teilgetriebe 306, 307 bei beiden Anordnungen identisch. Lediglich das Summiergetriebe 308 ist bei der Anordnung nach Figur 21 anders ausgestaltet, als dieses bei der Anordnung nach Figur 19 der Fall ist. Aus diesem Grunde wird auch an dieser Stelle auf eine detaillierte Erläuterung der übereinstimmenden Bestandteile und ihrer Funktionsweise verzichtet.

Bei dem in Figur 21 dargestellten stufenlos einstellbaren Getriebe ist die Abtriebswelle 309 unmittelbar mit einem Außenkranz 324 eines Planetengetriebes verbunden und läuft gemeinsam mit diesem um. Darüber hinaus sind die Planetenräder 312 in einem Gestell 325 gelagert, welches gemeinsam mit den Planetenrädern 312 und einem Rad 326 umlaufen kann, wobei das Rad 326 mit dem Ritzel 315 auf der Abtriebswelle 306 des Kegels 303 kämmt. Das Sonnenrad 313 hingegen ist, wie bei den Ausführungsbeispielen nach Figuren 19 und 20, mit einem Rad 317 verbunden, welches mit dem Ritzel 318 auf der Abtriebswelle 319 des Kegels 2 kämmt.

Auch das in Figur 21 dargestellte Getriebe 308 wirkt somit als Summengetriebe und addiert bzw. subtrahiert die Drehzahlen der beiden Teilgetriebe 306, 307.

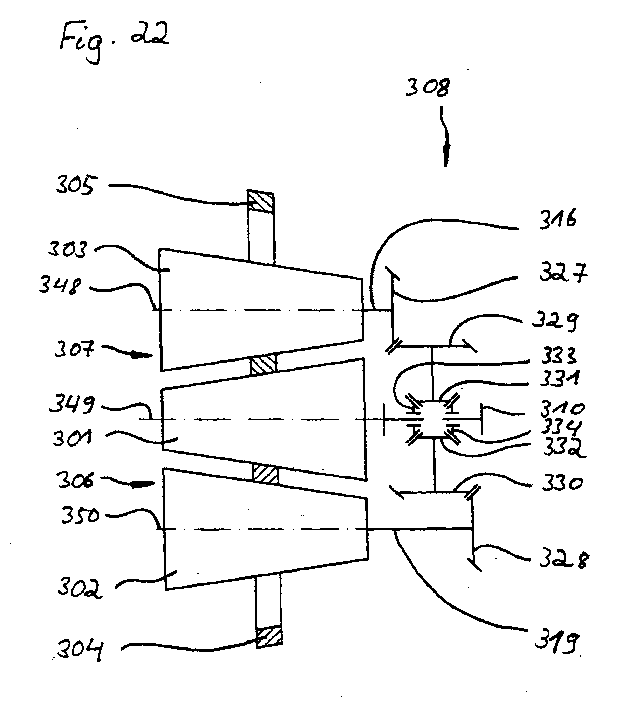

Auch die in Figur 22 dargestellte Anordnung entspricht hinsichtlich ihrer Teilgetriebe 306, 307 den Anordnungen, die in den Figuren 19 bis 21 dargestellt sind. Im Wesentlichen ist lediglich das Getriebe 308 anders ausgestaltet. Hierbei ist das Summengetriebe 308 über Kegelräder 327 bzw. 328, die jeweils an den Abtriebswellen 316 bzw. 319 der Kegel 303 bzw. 302 angeordnet sind, angetrieben. Hierfür kämmen die Kegelräder 327 bzw. 328 mit Kegelrädern 329 bzw. 330, welche ihrerseits mit den ortsfest um die eigene Achse rotierenden Kegelrädern 331 bzw. 332 des Differentials verbunden sind. Der Abrieb des Getriebes nach Figur 22 erfolgt über ein Zahnrad 310, welches mit den Achslagern der umlaufenden Kegelräder 333 bzw. 334 des Differentials, die ihrerseits mit den Kegelrädern 331 bzw. 332 des Differentials kämmen, verbunden ist. Wie unmittelbar ersichtlich, wird durch diese Anordnung ebenfalls ein Summengetriebe bereitgestellt.

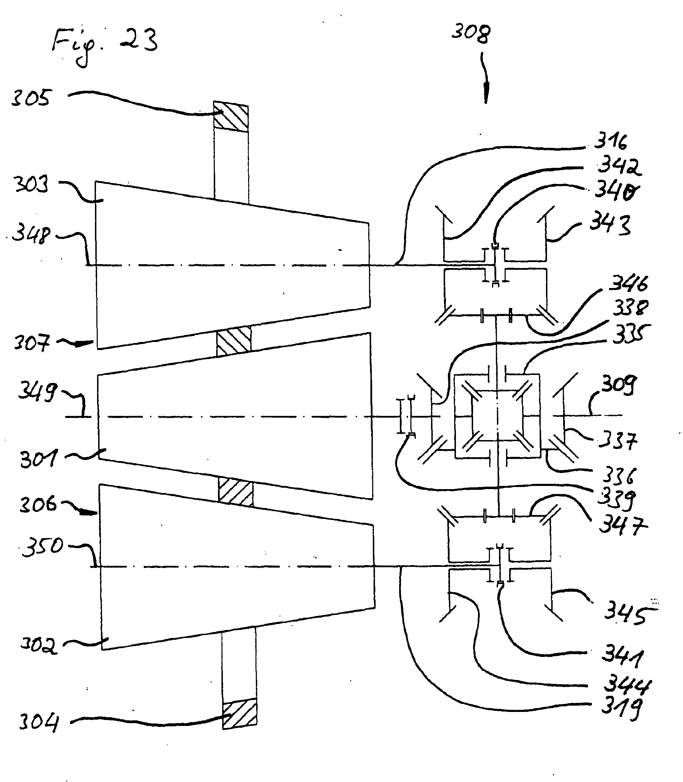

Das Ausführungsbeispiel nach Figur 23 entspricht in seinem Grundaufbau dem Ausführungsbeispiel nach Figur 22, sodass auch hier das Summengetriebe 308 im Wesentlichen durch ein Differential 335, welches mit einem Abtriebsrad 336 über ein Kegelrad 337 die Abtriebswelle 309 antreibt, gebildet ist. Darüber hinaus kämmt das Abtriebsrad 336 mit einem Kegelrad 338, welches seinerseits über eine synchronisierte Kupplung 339 mit dem Antriebskegel 301 verbindbar ist, sodass nach Bedarf die beiden Teilgetriebe 306, 307 überbrückt werden können. Darüber hinaus sind bei dieser Anordnung die Abtriebswellen 316, 319 der Abtriebskegel 302, 303 über synchronisierte Kupplungen 340 bzw. 341 wahlweise auf Kegelräder 342, 343 bzw. 344, 345 schaltbar, welche ihrerseits mit Kegelrädern 346 bzw. 347 kämmen, die jeweils mit den um eine feststehende Achse umlaufenden Kegelrädern des Differentials verbunden sind. Durch die Kupplungen 340 bzw. 341 lässt sich somit auf einfache Weise die wirksame Drehrichtung der Teilgetriebe 306, 307 verändern, sodass das Getriebe nach Figur 23 ein äußerst vielseitiges Getriebeverhalten aufweist.

Es versteht sich, dass statt der dargestellten Kegelreibringgetriebe 306, 307 auch andere stufenlos einstellbare Getriebe als Teilgetriebe für derartige erfindungsgemäße stufenlos einstellbaren Getriebe vorteilhaft zur Anwendung kommen können. Wie unmittelbar aus den Figuren 19 bis 23 ersichtlich, weisen die Teilgetriebe 306, 307, definiert durch die jeweiligen Kegelachsen 348, 349, 350, die jeweils parallel zueinander ausgerichtet sind, Teilgetriebeebenen auf, die alle in der Zeichnungsebene liegen. Auf diese Weise bauen diese Getriebe äußerst flach und eignen sich insbesondere für eine Anwendung bei LKW bzw. Klein-LKW, da sie beispielsweise unterhalb einer Ladefläche vorgesehen sein können. Diese Eignung gilt um so mehr, da die erfindungsgemäßen Getriebe durch die Verwendung zweier Teilgetriebe auch bei höheren Drehmomenten, wie diese durch moderne Dieselmotoren aufgebracht werden, mit gutem Wirkungsgrad arbeiten, weil extrem hohe Anpresskräfte durch die Verwendung zweier Teilgetriebe vermieden werden können.

Wie bereits anhand der Beschreibung und der Ausführungsbeispiel nach Figuren 19 bis 22 angedeutet und beispielhaft anhand des Ausführungsbeispiels nach Figur 23 erläutert, kann durch die Wahl der Drehrichtungen, mit welchen die Teilgetriebe 306, 307 auf das Summengetriebe 308 wirken, die Charakteristik des Gesamtgetriebes erheblich beeinflusst werden. Insbesondere sind diesbezüglich Rückwärtsgänge bzw. die Drehrichtung wechselnde Getriebeteile von Vorteil. Eine diesbezüglich Alternative ist in Figur 8 beispielhaft für das vorstehend bereits Teilgetriebe 80 erläutert

Es versteht sich, dass bei den in Figuren 19 bis 23 dargestellten Getriebe der Kraftfluss auch umgekehrt gewählt werden kann, sodass die Ausgangsglieder 309, 310 als Eingangsglieder und der Eingangskegel 301 als Ausgangskegel dient.

## Patentansprüche

1. Getriebe mit einem stufenlos einstellbaren Kegelreibringgetriebe als stufenlos einstellbares Teilgetriebe und mit zwei parallel geschalteten Getriebesträngen (1, 2; 101, 102), wobei das stufenlos einstellbare Teilgetriebe in dem ersten der beiden Getriebestränge (1, 2; 101, 102)vorgesehen ist, ***dadurch gekennzeichnet, dass*** ein Schaltgetriebeteil (3) das stufenlos einstellbaren Getriebeteil (1) mit einem Pumpenrad (21) eines Trilokwandlers (20) oder einer anderen Baugruppe, die unmittelbar mit einer Motorausgangswelle verbunden ist, koppelt und der zweite Getriebestrang (2) mit einem Turbinenrad (22) eines Trilokwandlers (20) oder einer anderen zuschaltbaren Motorausgangsbaugruppe gekoppelt ist.

2. Getriebe nach Anspruch 1, ***dadurch gekennzeichnet, dass*** in dem zweiten der beiden Getriebestränge (1, 2; 101, 102) ein Rückwärtsgang, ein erster Gang und/oder ein Overdrive vorgesehen ist.

3. Getriebe nach Anspruch 1 oder 2, ***dadurch gekennzeichnet, dass*** zwischen den beiden Getriebesträngen wenigstens ein Freilauf vorgesehen ist.

4. Getriebe nach einem der vorstehenden Ansprüche, ***dadurch gekennzeichnet, dass*** die Ausgänge der beiden Getriebestränge (1, 2) derart gekoppelt sind, dass vor dem Schaltvorgang von dem einen in den anderen der beiden Getriebestränge eine Drehzahlanpassung des ersten Getriebestranges (1), 2) durch das stufenlos einstellbare Getriebe an die Drehzahl des zweiten Getriebestranges (1, 2) erfolgen kann.

5. Getriebe nach einem der vorstehenden Ansprüche, ***dadurch gekennzeichnet, dass*** der zweite Getriebestrang (2) ein Differentialgetriebeglied (23) umfasst.

6. Getriebe nach einem der vorstehenden Ansprüche, ***gekennzeichnet* durch** einen dritten Getriebestrang, der über ein zweites Schaltgetriebeteil und/oder über einen Freilauf zuschaltbar ist.

7. Getriebe nach einem der Ansprüche 1 bis 6, ***dadurch gekennzeichnet, dass*** der erste und der zweite Getriebestrang (1, 2; 101, 102) jeweils mit seinem Abtrieb (26, 126; 29; 129) an einem Antrieb (27; 127) eines folgenden Getriebestranges (15, 115) zusammengeführt sind bzw. mit diesem kämmen.

8. Getriebe nach Anspruch 7, ***dadurch gekennzeichnet, dass*** der Antrieb (127) des folgenden Getriebestranges das Hauptdifferential (115) eines Kraftfahrzeuges ist.

## Claims

1. A transmission having a continuously variable bevel friction ring transmission as a continuously variable partial transmission and having two gear trains shifted in parallel (1, 2; 101, 102), the continuously variable partial transmission being provided in the first of the two gear trains (1, 2; 101, 102), **characterized in that** a shift gear part (3) couples the continuously variable transmission part (1) to a pump wheel (21) of a Trilok converter (20) or another assembly which is directly connected to an engine output shaft, and the second gear train (2) is coupled to a turbine wheel (22) of a Trilok converter (20) or another engine output assembly which may be switched in.

2. The transmission according to Claim 1, **characterized in that** a reverse gear, a first gear, and/or an overdrive are provided in the second of the two gear trains (1, 2; 101, 102).

3. The transmission according to Claim 1 or 2, **characterized in that** at least one freewheel is provided between the two gear trains.

4. The transmission according to one of the preceding claims, **characterized in that** the outputs of the two gear trains (1, 2) are coupled in such a way that before the shift procedure from one into the other of the two gear trains, a speed adaptation of the first gear train (1, 2) to the speed of the second gear train (1, 2) may be performed by the continuously variable transmission.

5. The transmission according to one of the preceding claims, **characterized in that** the second gear train (2) comprises a differential gearing element (23).

6. The transmission according to one of the preceding claims, **characterized by** a third gear train, which may be switched in via a second shift gear part and/or via a freewheel.

7. The transmission according to one of Claims 1 through 6, **characterized in that** the first and the second gear trains (1, 2; 101, 102) each come together at their output (26, 126; 29; 129) at a drive (27; 127) of a following gear train (15, 115) and/or mesh therewith.

8. The transmission according to Claim 7, **characterized in that** the drive (127) of the following gear train is the main differential (115) of a motor vehicle.

## Revendications

1. Transmission comportant une transmission à anneau de friction conique réglable en continu en tant que transmission partielle réglable en continu et comportant deux arbres d'entraînement (1, 2 ; 101, 102) en parallèle, dans laquelle la transmission partielle réglable en continu est prévue dans le premier des deux arbres d'entraînement (1, 2 ; 101, 102), **caractérisée en ce que** la partie de boîte de vitesses (3) couple la partie de transmission (1) réglable en continu avec une roue de pompe (21) d'un convertisseur trilock (20) ou un autre module, qui est relié directement à un arbre de sortie de moteur, et le deuxième arbre d'entraînement (2) est couplé à une roue de turbine (22) d'un convertisseur trilock (20) ou d'un autre module de sortie de moteur pouvant être déclenché.

2. Transmission selon la revendication 1, **caractérisée en ce que** dans le deuxième des deux arbres de transmission (1, 2 ; 101, 102), une marche arrière, une première vitesse et/ou une vitesse surmultipliée est prévue.

3. Transmission selon la revendication 1 ou 2, **caractérisée en ce que** entre les deux arbres de transmission, au moins une roue libre est prévue.

4. Transmission selon une des revendications précédentes, **caractérisée en ce que** les sorties des deux arbres d'entraînement (1, 2) sont couplées de telle sorte que, avant le processus de commutation de l'un à l'autre des deux arbres d'entraînement, une adaptation de la vitesse de rotation du premier arbre d'entraînement (1, 2) peut être effectuée par l'intermédiaire de la transmission réglable en continu sur la vitesse de rotation du deuxième arbre d'entraînement (1, 2).

5. Transmission selon une des revendications précédentes, **caractérisée en ce que** le deuxième arbre d'entraînement (2) comprend un élément de transmission différentielle (23).

6. Transmission selon une des revendications précédentes, **caractérisée par** un troisième arbre d'entraînement, qui peut être déclenché par l'intermédiaire d'une deuxième partie de boîte de vitesses et/ou par l'intermédiaire d'une roue libre.

7. Transmission selon une des revendications 1 à 6, **caractérisé en ce que** le premier et le deuxième arbre d'entraînement (1, 2 ; 101, 102) sont respectivement réunis avec une prise de mouvement (26, 126 ; 29, 129) sur un dispositif d'entraînement (27 ; 127) d'un arbre d'entraînement (15, 115) suivant ou s'engrènent avec celle-ci.

8. Transmission selon la revendication 7, **caractérisée en ce que** le dispositif d'entraînement (127) de l'arbre d'entraînement suivant est le différentiel principal (115) d'un véhicule automobile.
